(19) Europäisches Patentamt
European Patent Office
Office européen des brevets

(11) **EP 4 428 203 A1**

(12) **EUROPEAN PATENT APPLICATION**

(43) Date of publication:
**11.09.2024 Bulletin 2024/37**

(21) Application number: **23160120.4**

(22) Date of filing: **06.03.2023**

(51) International Patent Classification (IPC):
**C09C 1/50** *(2006.01)*

(52) Cooperative Patent Classification (CPC):
**C09C 1/50;** C01P 2004/51; C01P 2006/12;
C01P 2006/19; C01P 2006/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Orion Engineered Carbons GmbH
65760 Eschborn (DE)**

(72) Inventors:
• **SCHINKEL, Arndt-Peter
56112 Lahnstein (DE)**
• **TIMMERMANS, Eddy
50354 Hürth (DE)**
• **DETERS, David
53173 Bonn (DE)**

(74) Representative: **f & e patent
Braunsberger Feld 29
51429 Bergisch Gladbach (DE)**

(54) **CARBON BLACK FROM PARTICULATE FEEDSTOCK MATERIALS**

(57) The present invention relates to a process for the production of carbon black in an entrained flow reactor by using particulate carbon-containing feedstock.

FIG. 1

**Description**

TECHNICAL FIELD

The present invention relates to a process for the production of carbon black in an entrained flow reactor by using particulate carbon-containing feedstock.

TECHNICAL BACKGROUND

The production of carbon black entails the cracking or thermal decomposition of a carbon-containing feedstock in a reaction chamber at temperatures such as 800°C (e.g. in the temperature range of 1100 °C and 2000 °C). These high temperatures are obtained by the combustion of a mixture comprising oxygen-containing gas and a combustion fuel (i.e. fuel). The carbon black (CB) entrained in the gases (hot gas flow) exiting the reaction chamber are then cooled in a quenching operation and then collected by any suitable means conventionally used in the art.

Carbon blacks have numerous uses such as a reinforcing agent or filler for the rubber and tire industries. Moreover, carbon black has seen increased use in other areas such as coloring agents and reprographic toners for copying machines. The various applications of carbon black necessitate a diverse range of carbon black characteristics such as particle size, structure, yield, surface area, and stain.

The carbon black formation can be separated into different process steps including raising the temperature of the feedstock up to pyrolysis temperature, pyrolysis of the feedstock to unsaturated species such as acetylene and aromatic containing intermediate products, nuclei formation, surface growing, and aggregation.

In the prior art, the feedstock for the production of carbon black in an entrained flow reactor, such as in a furnace reactor, is limited to liquid carbon-containing feedstocks. Liquid carbon-containing feedstocks are for example liquid hydrocarbons, such as cracker oil like oils derived from steam cracker or fluidized catalytic cracker.

Immediately after the injection of liquid carbon-containing feedstocks into a carbon black reactor, the feedstock is evaporated and carbon black is formed. The transformation of particulate carbon-containing feedstocks to gaseous components is considerably slower compared to liquid carbon-containing feedstocks so that it is difficult to achieve a desirable pyrolysis of the particulate carbon-containing feedstocks.

As an alternative approach, the particulate carbon-containing feedstock such as tires can be pyrolyzed in a pyrolysis reactor. The pyrolysis is carried out at low temperatures such as 500 °C and a liquid, a gaseous, and a solid fraction is obtained. The liquid fraction can then be used to produce new or virgin carbon black (nCB) in an entrained flow reactor such as a furnace reactor.

US 2002/0117388 A1 relates to the aforementioned pyrolysis of scrap rubber materials including old tires. The aim of US 2002/0117388 A1 is to recover the components in the scrap rubber materials such as carbon black. After the pyrolysis, carbon black can be recovered from the pyrolysis gas (recovered carbon black" (rCB).

However, the solid yield of the pyrolysis at low temperatures is low and a subsequent manufacturing process is required to obtain carbon black from the liquid fraction of the pyrolysis. Additionally, the coke content and ash content of recovered carbon black after pyrolysis is undesirable.

Accordingly, a new method should be developed for the manufacturing carbon black that allows to utilize particulate carbon-containing feedstocks. Surprisingly, it has been found that particulate carbon-containing feedstock can be used in an entrained flow reactor, wherein the hot gas flow has a temperature of at least 800 °C.

SUMMARY OF THE INVENTION

The objective is achieved by a method for producing carbon black from a particulate carbon-containing feedstock in entrained flow reactor having a flow passage along a central longitudinal axis of the reactor, comprising: (a) providing a hot gas flow, (b) providing a particulate carbon-containing feedstock, and (d) injecting the particulate carbon-containing feedstock in the hot gas flow to form carbon black, wherein the hot gas flow has a temperature of at least 800 °C.

Moreover, carbon black produced according to the inventive method is provided as well as a composition comprising (A) an elastomeric polymer material, and (B) carbon black obtained according to the invention and an article made of or comprising the inventive composition.

Additionally, particulate carbon-containing feedstock is used for the manufacturing of carbon black in an entrained flow reactor.

Furthermore, a method to adjust the position of the quench in an entrained flow reactor for the production of carbon black from a particulate carbon-containing feedstock is provided, comprising: I) injecting a particulate carbon-containing feedstock in a hot gas flow of an entrained flow reactor, wherein the hot gas flow has a temperature of at least 800 °C, II) quenching the hot gas flow comprising the produced carbon black II) measuring the transmittance of the produced carbon black III) adjusting the position of the quench in the entrained flow reactor until the transmittance of the produced carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

BRIEF DESCRIPTION OF THE DRAWINGS

Figure 1: Section of a furnace reactor

Figure 2: Feeding and mixing device comprising a nozzle

Figure 3: Laval-nozzle for the feeding and mixing device

Figure 4: Deagglomeration conduit for the feeding and mixing device

Figure 5: Feeding and mixing device without a nozzle

DETAILED DESCRIPTION

It must be noted that, as used in the specification and the appended claims, the singular forms "a," "an" and "the" include plural referents unless the context clearly dictates otherwise. Thus, for example, reference to "an oxygen-containing gas" includes mixtures of oxygen-containing gases, reference to "a fuel" includes mixtures of two or more such fuels, and the like.

The diameter always refers to the inner diameter of an object unless otherwise indicated. For example, the diameter of a tubular conduit refers to the inner diameter of the tubular conduit.

The expression "feedstock" refers to the feedstock for the production of carbon black. According to the present invention, a particulate feedstock is used for the production of carbon black. The expression or abbreviation feedstock used in the present disclosure refers to the particulate carbon-containing feedstock.

The expression "hot gas flow" refers to a carrier gas in the entrained flow reactor, such as a furnace reactor that brings the reaction mixture (comprising the particulate carbon-containing feedstock) to the required temperature for the pyrolysis reaction. For example, the "hot gas flow" is the gas stream after the combustion of fuel in a furnace reactor.

"Carbon black" as referred to herein means a material composed substantially, e.g. to more than 80 wt.%, or more than 90 wt.% or more than 95 wt.%, based on its total weight of carbon that is produced by pyrolysis or radical driven abstraction of not carbon atoms of a carbon-containing feedstock. Different industrial processes are known for the production of carbon blacks such as the furnace process, gas black process, acetylene black process, thermal black process or lamp black process. The production of carbon blacks is per se well known in the art and for example outlined in J.-B. Donnet et al., "Carbon Black:Science and Technology", 2nd edition, therefore being not described herein in more detail.

The reaction volume of the reactor is the volume of the reactor between the position of the injection of the particulate carbon-containing feedstock and the position of the quench.

The present invention relates to a method for producing carbon black from a particulate carbon-containing feedstock in entrained flow reactor having a flow passage along a central longitudinal axis of the reactor, comprising: (a) providing a hot gas flow, (b) providing a particulate carbon-containing feedstock, and (d) injecting the particulate carbon-containing feedstock in the hot gas flow to form carbon black, wherein the hot gas flow has a temperature of at least 800 °C.

Without being bound by theory, it is believed that the heating rate of particulate carbon-containing feedstock is lower compared to liquid carbon-containing feedstock so that it is desired that of particulate carbon-containing feedstock is injected in the hot gas flow of an entrained flow reactor at a suitable temperature of 800 °C or even higher. For instance, the temperature of the hot gas flow can be at least 900 °C, at least 1000 °C, at least 1100 °C, at least 1200 °C, at least 1300 °C, at least 1400 °C, at least 1500 °C, at least 1600 °C. The desired minimum temperature can be determined by measuring the transmittance of the produced carbon black. If the transmittance is low, the temperature of the hot gas flow can be increased.

The hot gas flow can be obtained by electrical preheating, plasma heating and combustion of a fuel and oxygen-containing gas. The hot gas flow can be provided by (a1) supplying fuel and oxygen-containing gas into a combustion chamber of the reactor, (b2) combusting fuel in the combustion chamber to produce the hot gas flow.

Accordingly, the present invention can relate to a method for producing carbon black from a particulate carbon-containing feedstock in entrained flow reactor having a flow passage along a central longitudinal axis of the reactor, comprising: (a) supplying fuel and oxygen-containing gas into a combustion chamber of the reactor, (b) combusting fuel in the combustion chamber to produce hot combustion gases, (d) injecting the particulate carbon-containing feedstock in the hot gas flow to form carbon black, wherein the hot combustion gases have a temperature of at least 800 °C.

The particulate carbon-containing feedstock can comprise inert compounds, coke, C,H-containing compounds, and/or carbon black, preferably carbon black and C,H-containing compounds. The particulate carbon-containing feedstock are particles and generally agglomerated particles. In contrast, a liquid carbon-containing feedstock means that the feedstock is liquid at 20 °C and 1 atm. It is preferred that the method for producing carbon black does not utilize liquid carbon-containing feedstock for the production of carbon black.

Generally, the entire feedstock for the production of carbon black is particulate carbon-containing feedstock.

Said particulate feedstock can comprise up to 10 wt.-% of an oil (extender oil). For instance, rubber granulates often comprise up to 10 wt.-% of an oil (extender oil). Said oil or extender oil is generally an aliphatic or aromatic oil.

The particulate carbon-containing feedstock is a feedstock that is suitable to produce carbon black, i.e. new carbon black. Thus, the particulate carbon-containing feedstock comprises materials that can be pyrolyzed.

The C,H-containing compound (hydrocarbon compound) can be used to produce the carbon black, i.e. the new carbon black (nCB) or virgin carbon black (vCB). The C,H-containing compounds refers to a compounds that each comprise C and H. For example, the C,H containing compounds are hydrocarbon compounds that can comprise heteroatoms such as O or S.

The particulate carbon-containing feedstock can comprise 10 to 100 wt.-% of C,H-containing compounds, preferably 20 to 99 wt.-% of C,H-containing compounds, more preferably 30 to 90 wt.-% of C,H-containing compounds, and most preferably 40 to 70 wt.-% of C,H-containing compounds, based on the total weight of the particulate carbon-containing feedstock.

The particulate carbon-containing feedstock can comprise inert compounds, and the inert compounds can comprise metals, metal compounds, silicon, silica. Metals can be zinc, silicon, calcium, aluminium, and/or iron.

The particulate carbon-containing feedstock can comprise 1 to 40 wt.-% inert compounds, preferably 3 to 30 wt.-% inert compounds, more preferably 4 to 20 wt.-% inert compounds, and most preferably 5 to 15 wt.-% inert compounds, based on the total weight of the particulate carbon-containing feedstock.

The particulate carbon-containing feedstock can in addition comprise carbon black, i.e. recovered carbon black. Said carbon black is typically present in tires and thus, can be recovered. The particulate carbon-containing feedstock should comprise 1 to 70 wt.-% of carbon black, preferably 5 to 60 wt.-% of carbon black, more preferably 10 to 50 wt.-% of carbon black, and most preferably 15 to 40 wt.-% of carbon black, based on the total weight of the particulate carbon-containing feedstock. Alternatively, the particulate carbon-containing feedstock is free of recovered carbon black.

In this context, recovered carbon black means carbon black that can be recovered in the process. In other words, carbon black that is present in the feedstock and not produced in the inventive process.

The C,H-containing compound are for example rubber, plastics and/or biomass-based materials. The particulate carbon-containing feedstock is preferably provided as granulate (i.e. carbon-containing granulate feedstock). Accordingly, the particulate carbon-containing feedstock may comprise or is rubber granulate, plastic granulate, and/or biomass-based granulate. Accordingly, the particulate carbon-containing feedstock can be particulate rubber feedstock, particulate plastic feedstock, and/or particulate biomass-based feedstock. It is preferred that the particulate carbon containing feedstock comprises rubber granulate, wherein the rubber granulate comprising carbon black.

A biomass-based feedstock can be distinguished from fossil-based feedstock by measuring the C14 content ($^{14}$C content) in the feedstock (Radiocarbon dating). The relative amount of C14 atoms compared to C12 (C14 to C12 ratio / $^{14}$C/$^{12}$C ratio) is lower in a fossil-based feedstock in comparison to a biomass-based feedstock. Accordingly, fossil-based feedstock is feedstock that has relative amount of C14 atoms compared to C12 that is lower than the naturally occurring (or bio-based) relative amount of C14 atoms compared to C12.

Preferably the amount of particulate biomass-based feedstock in the particulate carbon-containing feedstock is 20 to 100 wt.-%, such as 40 to 100 wt.-%, 50 to 99 wt.-%, 60 to 95 wt.-%, or 60 to 80 wt.-% based on the total weight of the particulate carbon-containing feedstock.

Preferably the amount of particulate rubber granulate in the particulate carbon-containing feedstock is 20 to 100 wt.-%, such as 40 to 100 wt.-%, 50 to 99 wt.-%, 60 to 95 wt.-%, or 80 to 90 wt.-% based on the total weight of the particulate carbon-containing feedstock.

Preferably the amount of particulate plastic feedstock in the particulate carbon-containing feedstock is 20 to 100 wt.-%, such as 40 to 100 wt.-%, 50 to 99 wt.-%, 60 to 95 wt.-%, or 80 to 90 wt.-% based on the total weight of the particulate carbon-containing feedstock.

The particulate biomass-based carbon black feedstock can comprise a plant-based feedstock, preferably a non-edible plant-based feedstock and/or a waste plant-based feedstock. As used herein, the term "non-edible" refers to materials that are unsuitable for human consumption. The term "waste" refers to materials that are discarded or disposed of as unsuitable or no longer useful for the intended purpose, e.g., after use.

The particulate biomass-based carbon black feedstock can comprise wood, grass, cellulose, hemicellulose, lignin and/or natural rubber.

As used herein, the term "wood" refers to porous and fibrous structural tissue found in the stems and roots of trees and other woody plants. Suitable examples of wood include, but are not limited to, pine, spruce, larch, juniper, ash, hornbeam, birch, alder, beech, oak, pines, chestnut, mulberry or mixtures thereof. Suitable examples of grass include, but are not limited to, cereal grass, such as maize, wheat, rice, barley or millet; bamboos and grass of natural grassland and species cultivated in lawns and pasture. Suitable examples of lignin may include, but are not limited to, lignin removed by Kraft process and lignosulfonates.

The rubber granulate can comprise natural rubber and/or synthetic rubber. The particulate carbon-containing feedstock can comprise rubber granulate comprising carbon black. Natural rubber may be derived from rubber trees (Helvea brasiliensis), guayule, and dandelion. The rubber granulate or the particulate carbon-containing feedstock can be derived from tires, cable sheaths, tubes, conveyor belts, shoe soles, hoses or mixtures thereof.

Synthetic rubber may include styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), ethylene-propylene rubber (EPM), butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or a mixture or combinations of any of the foregoing.

The plastic granulate or particulate plastic feedstock can be any plastic know in the art. For instance, acrylics such as poly(acrylic acid), or poly(methyl methacrylate), polyesters such as polyethylene terephthalate, or polyethylene glycol, polyurethanes such as derived from toluene diisocyanate (TDI) or methylene diphenyl diisocyanate, polyolefins such as polypropene, or polyethylene, or polystyrene. Generally, thermoplastics and thermosets can be used.

The plastic granulate are preferably derived from waste materials of households. For instance, plastic bags, plastic containers, plastic packaging etc.

The feedstock is provided as a particulate. This can be done by milling to the desired particle or granulate size. For instance, tires can be milled to obtain a particulate rubber granulate as the feedstock.

It is desired that at least 50 wt.-%, preferably at least 60 wt.-%, more preferably at least 70 wt.-%, most preferably at least 80 wt.-%, of the particulate carbon-containing feedstock has a particle size of 125 $\mu$m to 2 mm, preferably 125 $\mu$m to 1 mm, more preferably 250 $\mu$m to 1 mm, and most preferably 500 $\mu$m to 1000 $\mu$m, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate carbon-containing feedstock has a particle size of less than 2 mm, preferably less than 1 mm, more preferably less than 500 $\mu$m, and most preferably less than 250 $\mu$m, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate carbon-containing feedstock has a particle size of less than 500 $\mu$m, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate carbon-containing feedstock has a particle size of less than 1 mm, wherein the particle size is measured according to ASTM D 1511-12 (2017).

It is desired that at least 70 wt.-%, preferably at least 80 wt.-%, more preferably at least 90 wt.-%, most preferably at least 98 wt.-%, of the particulate carbon-containing feedstock has a particle size of less than 2 mm, preferably less than 250 $\mu$m, wherein the particle size is measured according to ASTM D 1511-12 (2017).

It is desired that less than 1 wt.-%, preferably at least 0.5 wt.-%, more preferably less than 0.1 wt.-%, most preferably less than 0.01 wt.-%, of the particulate carbon-containing feedstock has a particle size of more than 2 mm, preferably more than 1 mm, more preferably more than 500 $\mu$m, and most preferably more than 250 $\mu$m, wherein the particle size is measured according to ASTM D 1511-12 (2017).

It is particularly preferred that the particulate carbon-containing feedstock has a particle size of less than 2 mm, preferably less than 1 mm, more preferably less than 500 $\mu$m, and most preferably less than 250 $\mu$m, wherein the particle size is measured according to ASTM D 1511-12 (2017).

The particle size of the feedstock can be controlled by classify the particulate carbon-containing feedstock before the particulate carbon-containing feedstock is injected into the reactor. Accordingly, it is preferred that the particulate carbon-containing feedstock is classified before injecting into the reactor or before injecting into the mixing and feeding unit.

The classification can be done by any means known in the art such as sieving or other classifications. Classification can be done using vibratory screeners, rotary screeners, cyclones, elutriation classifiers, air jet sieve and/or dynamic air classifiers. Any of the aforementioned combinations can be used. Said classification can be used in order to obtain a maximum or minimum desired particle size as described in the specification.

The particle size of the feedstock can be controlled by sieving the particulate carbon-containing feedstock before the particulate carbon-containing feedstock is injected into the reactor. The sieves sizes as described in ASTM D 1511-12 (2017) can be used. For instance, a sieve having openings of 2000 $\mu$m, 1000 $\mu$m, 500 $\mu$m, 250 $\mu$m, or 125 $\mu$m, preferably 500 $\mu$m, 250 $\mu$m, or 125 $\mu$m, can be used. Moreover, the sieve can have openings with a size that restrains particles with a size of more than 2000 $\mu$m, more than 1000 $\mu$m, more than 500 $\mu$m, more than 250 $\mu$m, or more than 125 $\mu$m, preferably more than 500 $\mu$m, more than 250 $\mu$m, or more than 125 $\mu$m.

No more than 10 wt.-%, preferably no more than 5 wt.-%, more preferably no more than 4 wt.-%, and most preferably no more than 2 wt.-% of the particulate carbon-containing feedstock should have a particle size of over 4 mm, preferably over 2 mm, more preferably over 1 mm, and most preferably over 0.5 mm, wherein the particle size is measured according to ASTM D 1511-12 (2017).

No more than 10 wt.-%, preferably no more than 5 wt.-%, more preferably no more than 4 wt.-%, and most preferably no more than 2 wt.-% of the particulate carbon-containing feedstock should have a particle size of less than 150 $\mu$m, preferably less than 125 $\mu$m, more preferably less than 110 $\mu$m, and most preferably less than 100 $\mu$m, wherein the particle size is measured according to ASTM D 1511-12 (2017).

None of the particles of the particulate carbon-containing feedstock should have a particle size of 1 mm or more, preferably of 500 $\mu$m or more, more preferably of 250 $\mu$m or more, and most preferably of 125 $\mu$m or more, wherein the particle size is measured according to ASTM D 1511-12 (2017).

The particle size distribution of the particulate carbon-containing feedstock can be measured according to ASTM D 1511-12 (2017) and (a) Sieve No. 10 retains 1 to 0 to 10 wt.-%, preferably 1 to 8 wt.-%, more preferably 1 to 5 wt.-%, and most preferably 1 to 3 wt.-% of the particulate carbon-containing feedstock, and/or (b) Sieve No. 18 retains 1 to 25 wt.-%, preferably 2 to 20 wt.-%, more preferably 4 to 15 wt.-%, and most preferably 5 to 12 wt.-% of the particulate carbon-containing feedstock, and/or (c) Sieve No. 35 retains 10 to 80 wt.-%, preferably 15 to 70 wt.-%, more preferably 20 to 60 wt.-%, and most preferably 25 to 55 wt.-% of the particulate carbon-containing feedstock, and/or (d) Sieve No. 60 retains 5 to 70 wt.-%, preferably 10 to 60 wt.-%, more preferably 15 to 50 wt.-%, and most preferably 20 to 45 wt.-% of the particulate carbon-containing feedstock, and/or (e) Sieve No. 120 retains 1 to 80 wt.-%, preferably 7 to 70 wt.-%, more preferably 5 to 60 wt.-%, and most preferably 7 to 50 wt.-% of the particulate carbon-containing feedstock, and/or (f) Bottom receive pan comprises less than 4 wt.-%, preferably less than 3 wt.-%, more preferably 0 to 2 wt.-%, and most preferably 0.01 to 1 wt.-% of the particulate carbon-containing feedstock. It is desirable to choose the desired range for each sieve independently.

The 50 wt.-% cumulative particle size of the particulate carbon-containing feedstock should be from 100 $\mu$m to 4 mm preferably 100 $\mu$m to 3 mm, more preferably 100 $\mu$m to 2 mm, and most preferably 100 $\mu$m to 500 $\mu$m, wherein the 50 wt.-% cumulative particle size is measured according to ASTM D 1511-12 (2017). The 50 wt.-% cumulative particle size can be interpolated using standard techniques know in the art. It is particularly, preferred that the Rosin-Rammler-Sperling-Bennett distribution (RRSB distribution) is used to interpolate the 50 wt.-% cumulative particle size.

The weight average particle size Dw50 of the particulate carbon-containing feedstock can be from 100 $\mu$m to 4 mm preferably 100 $\mu$m to 3 mm, more preferably 100 $\mu$m to 2 mm, and most preferably 100 $\mu$m to 500 $\mu$m, wherein the weight average particle size Dw50 is measured according to ASTM D 1511-12 (2017).

The particle size distribution Dw10 of the particulate carbon-containing feedstock can be from 100 $\mu$m to 250 $\mu$m preferably 110 $\mu$m to 220 $\mu$m, more preferably 120 $\mu$m to 210 $\mu$m, and most preferably 130 $\mu$m to 200 $\mu$m, wherein the particle size distribution Dw10 is measured according to ASTM D 1511-12 (2017).

The particle size distribution of the particulate carbon-containing feedstock Dw90 can be from 400 $\mu$m to 4 mm preferably 500 $\mu$m to 3 mm, more preferably 600 $\mu$m to 2 mm, and most preferably 700 $\mu$m to 500 $\mu$m, wherein the particle size distribution Dw90 is measured according to ASTM D 1511-12 (2017).

The span of the particle size distributions of the particulate carbon-containing feedstock (Dw90-Dw10) / Dw50 can be 0.2 to 1.8, preferably 0.3 to 1.3, more preferably 0.4 to 1.1, most preferably 0.4 to 1.0, wherein the particle size distributions Dw10, Dw50, and Dw90 are measured according to ASTM D 1511-12 (2017).

The Dw50, Dw10, and Dw90 can be interpolated using standard techniques know in the art. It is particularly, preferred that the Rosin-Rammler-Sperling-Bennett distribution (RRSB distribution) is used to interpolate the Dw50, Dw10, and Dw90.

The particle or granulate size has an influence of the heating rate of the feedstock in the reactor. Smaller granulates or particles have a higher specific surface area so that the heating rate is higher. A fast-heating rate is beneficial so that the particulate feedstock can evaporate and then pyrolyzed. It is believed that the pyrolysis is significantly faster than the evaporation of the particulate feedstock. The heating rate can also be increased by a higher temperature of the hot gas flow.

The carbon black produced according to the present invention (such as including the rCB) and/or the particulate carbon-containing feedstock can have a pMC (percent of modern carbon) of 1% or more, determined according to ASTM D6866-20 Methode B (AMS), such as 2 % or more, or 5 % or more, or 7 % or more, or 10 % or more, or 12 % or more, or 15 % or more, or 17 % or more, or 20 % or more, or 22 % or more, or 25 % or more, or 27 % or more, or 30 % or more, or 32 % or more, or 35 % or more, or 37 % or more, or 40 % or more, or 42 % or more, or 45 % or more, or 47 % or more, or 50 % or more, or 52 % or more, or 55 % or more, or 57 % or more, or 60 % or more, or 62 % or more, 65 % or more, or 67 % or more, or 70 % or more, or 72 % or more, or 75 % or more, or 77 % or more, or 80 % or more, or 82 % or more, or 85 % or more, or 87 % or more, or 90 % or more, or 92 % or more, or 95 % or more, or 97 % or more, or 99 % or more. For each sample, a ratio of $^{14}C/^{13}C$ is calculated and compared to measurements made on Oxalic Acid II standard (NIST-4990C). The measured values (pMC) are corrected by d13C measured using an isotope ratio mass spectrometer (IRMS). The carbon black of the present invention can have a pMC (percent of modern carbon) of 5% or more, determined according to ASTM D6866-20 Methode B (AMS), preferably of 10 % or more, particularly preferably of 15 % or more, more preferably of 50 % or more, even more preferably of 85 % or more, most preferably of 90 % or more. The carbon black of the present invention can have a pMC (percent of modern carbon) of 100%, determined according to ASTM D6866-20 Methode B (AMS).

The obtained carbon black typically comprise recovered carbon black and new carbon black. Recovered carbon black is generally obtained if the particulate carbon-containing feedstock comprises carbon black. The new carbon black is obtained by pyrolysis, i.e. the method according to the invention.

The mass flow of the feedstock should be adjusted so that feedstock can be uniformly heated. The particulate carbon-containing feedstock should be injected into the reactor with a mass flow of 2 to 50 kg/h per 130 L of the reaction volume of the reactor, preferably 5 to 40 kg/h per 130 L of the reaction volume of the reactor, more preferably 8 to 30 kg/h per 130 L of the reaction volume of the reactor, and most preferably 10 to 20 kg/h per 130 L of the reaction volume of the reactor.

The fuel can comprise a gaseous or liquid hydrocarbons, preferably natural gas, a fuel oil or $H_2$.

Hydrogen can be used as carrier gas and/or fuel for producing carbon black. It is preferred that the hydrogen is used as carrier gas and fuel for producing carbon black. Hydrogen will be used as a carrier gas if the hydrogen is present in the combustion mixture in molar excess with respect to oxygen. Thus, hydrogen should be present in the hot combustion gases and the hot reaction mixture.

The hot gas flow should have a temperature of 900 to 3500 °C, preferably 950 to 3000 °C, more preferably 1000 to 2000 °C, and most preferably 1200 to 1900 °C.

The hot gas flow can be obtained by electrical preheating, plasma and combustion of a fuel and oxygen containing gas. The combustion of a fuel and oxygen containing gas is preferably done in a furnace reactor. However, other means to provide the desired temperature of the hot gas flow are possible as mentioned above.

The entrained flow reactor can be a furnace reactor. The furnace reactor can have a flow passage along a central longitudinal axis of the reactor. The reactor generally comprises in the following order from upstream to downstream (flow direction) a combustion chamber, a choke, and a tunnel comprising quenching means. These components define a flow passage along the central longitudinal axis of the reactor for the hot gas flow, such as the hot combustion gases. Thus, the components should be in fluid connection, particularly along a central longitudinal axis of the reactor.

A tubular conduit can be connected to the combustion chamber for supplying oxygen-containing gas that is necessary for the combustion of the fuel (or combustion fuel). The tubular conduit can be also arranged along the central longitudinal axis of the reactor so that the supplement of the oxygen-containing gas occurs along the above-mentioned flow passage. Furthermore, the reactor can comprise fuel injection means for injecting the fuel into the combustion chamber.

Generally, a fuel lance is used to supply the fuel into the combustion chamber. The combustion chamber can be connected to the tubular conduit in the downstream to upstream direction so that the oxygen-containing gas can be supplied to the combustion chamber. The combustion chamber is arranged along the central longitudinal axis of the reactor.

The combustion chamber is preferably formed of an internal refractory lining covered by a gas tight e.g. metallic covering. The material forming the refractory, and outer lining can be those found conventionally in the art such as the castable refractory Kaocrete® 32-cm which is 70% alumina ($Al_2O_3$) and has a melting point of about 1870 °C. Additionally, a brick refractory can be relied upon such as RUBY SR (sold by Harrison-Walker Refractories, Pittsburg, PA.) brick refractory which is 84.5% alumina along with 9.8% chromic oxide ($Cr_2O_3$) and has a melting point of about 2050 °C. The shell or lining is preferably formed of carbon steel except for any piping in contact with hot process air. In those areas, the piping is formed of "316 Stainless Steel".

The combustion chamber is preferably dimensioned as a cylinder. A constricting section (choke) can be provided downstream of the combustion chamber. The constriction section has a tapering passageway and converges in an upstream to downstream direction. Preferably, these constriction sections are in the form of a frustoconical passageway. The combustion chamber can also have a tapered in the downstream to upstream direction. Accordingly, the combustion chamber can comprise a zone that is tapered towards the reaction chamber and/or towards the tubular conduit.

Typically, the oxygen-containing gas is preheated to a temperature between 200 to 1600 °C, preferably 350 to 1400 °C, more preferably 500 to 1200 °C, and most preferably 450 to 950 °C.

Typically, the fuel is preheated to a temperature between 50 to 750 °C, preferably 100 to 700 °C, more preferably 300 to 700 °C, and most preferably 450 to 650 °C.

The preheating of the oxygen-containing gas and fuel can be done electrically or using a heat exchanger.

Water has an influence of the surface properties of the produced carbon black. Accordingly, it is possible that the amount of oxygen-containing gas, such as $O_2$, in the combustion mixture is used to control the amount of water in the hot combustion mixture and/or hot reaction mixture and thus, preferably control the surface properties of the produced carbon black.

The tunnel is connected with the combustion chamber so that the hot combustion gases obtained in the combustion chamber can flow into the tunnel. The tunnel can be arranged along the central longitudinal axis of the reactor. The diameter of the reaction chamber can be higher than the diameter of the constriction section of the combustion chamber so that the hot combustion gas is able to expand. The expansion section is preferably dimensioned as a cylinder and in communication with the combustion chamber, preferably in the communication with the constriction section (choke) of the combustion chamber.

The particulate carbon-containing feedstock can be injected in the combustion chamber, in the choke, and/or in the tunnel of the furnace reactor. The particulate carbon-containing feedstock is typically injected in the choke (constriction section).

If the particulate carbon-containing feedstock is injected for example in the combustion chamber, the particulate carbon-containing feedstock or the carrier gas comprising said feedstock should have a desirable pressure. This means that the pressure of the particulate carbon-containing feedstock or the carrier gas comprising said feedstock should be higher than the pressure in the combustion chamber. Accordingly, a suitable feeding and mixing device should be used that is configured to operate in pressurized conditions.

The particulate carbon-containing feedstock should be injected via multiply inlets, preferably radial and perpendicular to the central longitudinal axis of the reactor.

The concentration of $O_2$ in the hot gas flow should be less than 5 vol.-%, preferably less than 4 vol.-%, more preferably 0.01 to 3 vol.-%, and most preferably 0.1 to 2 vol.-%.

The obtained carbon black generally comprises recovered carbon black and new carbon black.

The particulate carbon-containing feedstock may be injected to the reactor via means to inject the feedstock. The means to inject the feedstock can comprise a plurality of injection nozzles or lances that are preferably arranged circumferentially with respect to the central longitudinal axis. The circumferential arrangement further improves the uniform characteristics of the carbon black since the feedstock for the carbon black can be homogenously mixed with the hot gas flow. The particulate carbon-containing feedstock can be introduced through a plurality of means to inject the feedstock.

For instance, an axially extending feedstock lance and a radially extending feedstock injectors with nozzles capable of producing a variety of cone shaped sprays (e.g., 15, 30, 45 and 60 degrees cone spray angles) can be implemented.

For producing the desired carbon black characteristics, radially extending feedstock injectors can be provided with shut off valves such that feedstock is only introduced through certain of the feedstock injectors or the flow rate is varied for the feedstock flowing in the injectors.

The means to inject the feedstock is preferably connected to feeding and mixing device. It is desired that one feeding and mixing device supplies multiply feedstock inlets. However, it is also possible that more than one feeding and mixing device is used.

The tunnel can further comprise means for injecting a quenching medium into the flow passage along the central longitudinal axis of the reactor located subsequent with respect to the flow direction to inject a feedstock for the carbon black. Alternatively, the quenching means can be a quench boiler or heat exchanger.

The tunnel can comprise means for injecting a quenching medium into the flow passage along the central longitudinal axis of the reactor. The means for injecting a quenching medium are located subsequent with respect to the flow direction to the means to inject a feedstock for the carbon black. The quenching medium is generally $H_2O$.

The distance between the feedstock injection means and the means for injecting a quenching medium (the first means for injection a quenching medium) can be between 150 to 80,000 mm, preferably 900 to 50,000 mm, more preferably 1,500 to 30,000 mm, and most preferably 2,500 to 20,000 mm.

The means for injecting a quenching medium can extend into the tunnel. For instance, a cooling fluid conduit or a plurality of radial cooling fluid conduits can be used. The quenching medium, such as a cooling fluid (e.g. water), can be sprayed within the tunnel to stop the carbon black reaction at the appropriate time and location.

The reactor can further comprise a tubular conduit for supplying oxygen-containing gas to the combustion chamber. The oxygen-containing gas ($O_2$ containing gas or $O_2$ containing gas mixture) can be air, oxygen-enriched air, other oxygen containing gases and/or pure oxygen. Accordingly, the tubular conduit can be in connection with the combustion chamber so that the oxygen-containing gas is able to flow through the tubular conduit in the combustion chamber. The tubular conduit can be arranged along the central longitudinal axis of the reactor. It is desirable that the central longitudinal axis of the tubular conduit is coaxial to the central longitudinal axis of the reactor. Thus, the tubular conduit can be arranged coaxial along the central longitudinal axis of the reactor. The wt.-% of oxygen that is present in the oxygen-containing gas should be 20 to 100 wt.-%, preferably 50 to 99 wt.-%, more preferably 60 to 95 wt.-% and most preferably 70 to 90 wt.-%, wherein the wt.-% is based on the total weight of the oxygen-containing gas.

The tubular conduit can have a cylindrical shape that extents along the central longitudinal axis of the reactor without curvatures.

The inner diameter of the tubular conduit for supplying oxygen-containing gas can be from 5 cm to 3 m, such as 10 cm to 3 m, 20 cm to 3 m, 9 cm to 2.5 m, 13 cm to 1.5 m, 0.1 m to 2 m, 20 cm to 1 m, 30 cm to 1.5 m, 15 cm to 60 cm, or 15 cm to 90 cm.

The fuel injection means for introducing any suitable combustion fuel (e.g., natural gas, fuel oil or other gaseous or liquid hydrocarbons, preferably natural gas or a fuel oil, or $H_2$) can be configured in different ways. For example, the injection means can be arranged at the end of the tubular conduit, where the tubular conduit is connected to the combustion chamber. For instance, the injection means are tubular injection pipes arranged circumferentially with respect to the central longitudinal axis of the tubular conduit so that the injection angle of the fuel is substantially orthogonal to the flow direction of the oxygen-containing gas.

However, it is also possible to provide multiple fuel injection means in addition to the fuel lance. For instance, at the end of the tubular conduit additional fuel injection means are arranged rotationally symmetric with respect to the central longitudinal axis of the tubular conduit.

The oxygen-containing gas is generally supplied in an amount yielding an excess of oxygen with respect to the amount of oxygen for a complete combustion of the fuel, and/or wherein the oxygen-containing gas is supplied in an amount that the k-value is in a range of 0.01 to 10, preferably 0.1 to 5, more preferably 0.5 to 2, and most preferably 0.7 to 1. Where the k value is defined by the ratio of stoichiometric $O_2$ amount that is necessary for the complete stoichiometric combustion of the fuel to the supplied $O_2$ amount.

Fuel and oxygen-containing gas flow rates can be adjusted to give high temperatures and normally fall close to stoichiometric ratios. Ratios must be adjusted to prevent melting the refractory. The range of oxygen-containing flow is quite broad, going, for instance, from a low of approximately 1000 Nm³/h to a high of approximately 100 kNm³/h, such as 1000 Nm³/h to 100 kNm³/h, 1000 Nm³/h to 10 kNm³/h, 2000 Nm³/h to 3000 Nm³/h, or 1000 Nm³/h to 2000 Nm³/h. The invention, however, is not restricted to those dimensions; for larger reactors higher air flows are needed and for smaller reactors lower air flows are needed.

The desired temperature of the hot gas flow can also be achieved by plasma heating the gas flow. The gas flow can be preheating as mentioned above.

A plasma torch can provide the plasma for the aforementioned heating. A plasma torch design is described in WO 1993/012633 A1. However, any means known in the art to produce a plasma can be used. The plasma can be formed by means of a plasma carrier gas which is heated by an electric arc which burns between electrodes. In a plasma zone of high temperatures are reached, from 2500°C to 20,000°C, and it is in this zone that the plasma treatment can be achieved. The plasma carrier gas can be oxygen or hydrogen. Hydrogen as plasma carrier gas is particularly preferred.

A microwave plasma can also provide the plasma for the aforementioned treatment. For instance, a microwave generator can be used that provide microwave radiation inside the reaction chamber. Microwave radiation having 1 to 300 GHz can be used. Alternative, a plasma can be generated using a radio frequency power source (RF generator).

The residence time between the time of the injection of the particulate carbon-containing feedstock in the reactor and the time of the quench of product mixture should be from 150 ms to 4 sec, preferably 200 ms to 3 sec, more preferably 250 to 2 sec, and most preferably 250 ms to 1 sec. The residence time of the particulate carbon-containing feedstock means the time in that the particulate carbon-containing feedstock is evaporated and pyrolyzed. The quench of the product mixture stops the pyrolysis of the particulate carbon-containing feedstock. The heating rate of particulate carbon-containing feedstock is lower compared to liquid feedstocks so that the evaporation and pyrolysis of the particulate carbon-containing feedstock generally requires more time.

The residence time of the particulate carbon-containing feedstock should be 150 ms to 4 sec, preferably 200 ms to 3 sec, more preferably 250 to 2 sec, and most preferably 250 ms to 1 sec, wherein the residence time is calculated according equation (1);

$$t_r = \frac{V}{Q}$$

Equation (1),

wherein $t_r$ is the residence time, V is the volume of the reaction volume (in m³), and Q is the volumetric flow rate (in m³*s⁻¹).

The volumetric flow rate is the volume of the fluid after the injection of the particulate carbon-containing feedstock in the hot gas flow per second, preferably the volume of the fluid is calculated according to the ideal gas law according to equation (2)

$$Q = \frac{\dot{n}RT}{P}$$

Equation (2),

wherein Q is the volume flow of the fluid (in m³*s⁻¹), $\dot{n}$ is sum of the molar flow of gaseous substances $N_2$, $CO_2$, CO, $H_2O$, volatiles (in mol*s⁻¹), R is the gas constant, i.e, 8.3145 J·K⁻¹·mol⁻¹, T is the absolute temperature, P is the pressure. The pressure P can be measured in the reactor or alternatively 103125 Pa is used for the calculation. For $\dot{n}$ and the amount of substance, all substances are considered to be in gaseous state (including the particulate carbon-containing feedstock). The volatiles are the volatiles of the particulate carbon-containing feedstock measured according to ASTM D4530-15 (2020). For the molecular weight of the volatiles, 198 g/mol can be used. The components of the hot gas flow are calculated considered the complete combustion of the fuel. For the remaining oxygen, it is considered that the oxygen reacts with the carbon-containing material assuming that one $O_2$ results in one $H_2O$ and one CO. The calculation considers the fluid (for the volumetric flow calculation) after the injection of the particulate carbon-containing feedstock in the hot gas flow and that the carbon-containing part of the feedstock is completely in the gaseous state. Materials that are not in the gaseous state are not considered. Moreover, for the calculation, the pyrolysis of the carbon-containing part of the feedstock is not considered. An example for the calculation is specified in the description and can be adapted for the specific method for manufacturing carbon black.

The reaction volume of the reactor is the volume of the reactor between the position of the injection of the particulate carbon containing feedstock and the position of the quench.

The residence time should be selected in such a way that the C,H-containing material in the particulate carbon-containing feedstock is completely pyrolyzed.

The absolute temperature for the calculation of the volumetric flow rate can be directly measured in the reactor. Particularly, the temperature is measured directly after the injection of the feedstock into the reactor, such as 50 mm after the injection of the feedstock. For instance, the temperature can be measured with a pyrometer.

Alternatively, the absolute temperature T (for the calculation of the volumetric flow rate) can be calculated as follows. Said calculation considers the combustion of a fuel in a furnace reactor. The process contains a combustion of the fuel and a heating of the rubber granulate to the reaction temperature. The residual oxygen of the combustion will not lead to a complete combustion. Therefore, one can assume that according to C/H ratio of the feedstock we will form CO and $H_2O$ having the same ratio CO /$H_2O$.

The reaction temperature can be calculated by the energy balance

$$0 = m_F(h_F + H_{uF}) + \sum_{A=1}^{K} m_A h_A + m_{O_2} h_{O_2} + m_T(h_T + H_{uT}) + m_R(h_R + H_u) -$$

$$\sum_{i=1}^{L} mp_i(h_i + H_{u,i}) - Q_{Loss}$$

Equation (3)

The mass flow of the fuel is denoted by $m_F$, $h_F$ is the thermal enthalpy difference between the temperature and pressure at the inlet to the combustor of the fuel and the reference conditions of the fuel (T= 25 °C,P=101325 Pa), $m_A$ is the mass flow of inert species and $h_A$ is the thermal specific enthalpy difference of the inert species A between 25 °C and 1.01325 bar and the conditions of the inert species being introduced in the combustor (TA,PA) . The number of inert substances is denoted by K. Inert species are species that are not changed in the ideal process. These inert substances are e.g. nitrogen, carbon black, and minerals, water. $\Delta H_{uF}$ is the lower heating value of the fuel at a temperature of 25°C and a pressure of P=101325 Pa. The thermal enthalpy difference of the oxygen between the conditions of the feeding and the reference conditions (T=298,15 K, P=101325 Pa) is denoted by $h_{O_2}$ and the oxygen mass flow is denoted by $m_{O_2}$. The specific thermal enthalpy difference of the reaction product i between the condition of the reaction temperature T and P=101325 Pa and the reference conditions (T=298,15 K, P=101325 Pa) is denoted by $h_i$. The corresponding mass flow is denoted by $mp_i$ and the lower heating value of this compound is denoted by $H_{ui}$. If particulate containing feedstock is transported with a gas flow into the reactor this gaseous mass flow is denoted by $m_T$, the thermal enthalpy difference between the condition at the entrance to the reactor and the reference condition (T= 25°C,P=103125 Pa) of this mass flow is denoted by ($h_T$, and $H_{uT}$ is the corresponding lower specific heating value. The heat losses are considered by $Q_{Loss}$. The mass flow of the hydrocarbon part of the particulate containing carbon is denoted by $m_R$ and can be calculated by

$$m_R = m_s(1 - w - Conradson)$$

The mass flow of the particulate carbon-containing feedstock is denoted by $m_s$. The thermal enthalpy difference of the hydrocarbon between the entering state and the reference state (T= 25°C,P=101325 Pa) is given by $h_R$., and the corresponding lower heating value by $H_{uR}$.

The lower heating value is determined according to DIN 5499 and DIN 51857. If the gases are not reported in DIN 51857 the heating value can be determined by the heat of formation. These values are available in "Properties of Gases and Liquids", NIST Data Book etc. Based on the assumption of total oxidation of the species $C_xH_yS_zO_w$ and gaseous water as reaction product

$$C_xH_yS_zO_wA_p + v_{O_2}O_2 = xCO_2 + \frac{y}{2}H_2O + zS_{O_2} + eA_f$$

Equation (4)

Where A is not oxidized substance. $A_f$ is the substance A in the form of A in the combustion product. Therefore p=fe.

The heating value is

$$H_{uC_xH_yS_zO_wA_p} = \frac{1}{M_{C_xH_yS_zO_wA_p}} (\Delta_fH_{C_xH_yS_zO_wA_p}$$

$$- x\Delta_fH_{CO_2}(T_{298.15}) - x\Delta_fH_{H_2O}\ (T_{298.15}) - z\Delta_fH_{SO_2}(T_{298.15})$$

$$- e\Delta_fH_{CO_2}(T_{298.15}))$$

Equation (5)

If the reference temperature of the heat of formation is different from 298,15 K of a substance i one can calculate the heat using the molar heat capacity

$$\Delta_fH_i(T_{298.15}) = \Delta_fH_i(T_{Ref}) + \int_{T_{ref}}^{298.15\,K} C_{mp,i}\,dT$$

Equation (6)

The molar heat capacity could be found using the same text books like Properties of Gases and Liquids, NIST Data Book.

If the fuel consists of more than 1 species the lower heating value can be determined by the composition

$$\Delta H_u = \sum_{i=1}^{P} \xi_i \Delta H_{u,i}$$

Equation (7)

The mass fraction of the component I is denoted by $\xi_i$ and the lower heating value of component i is denoted by $\Delta H_{u,i}$, and the number of species in the fuel is denoted by P.

The thermal enthalpy difference of the fuel containing more than one species are calculated by

$$h_F = \frac{1}{M_F} \sum_{i=1}^{P} x_i \int_{298.15\,K}^{T_{Inlet,F}} C_{mp,i}\, dT$$

Equation (8)

The mean molecular weight of the fuel is determined by

$$M_{Gas} = \frac{1}{\sum_{i=1}^{P} x_i M_i}$$

Equation (9)

$M_i$ is the molecular weight of the species i.

If the composition is not known the lower heating value is determined by a calorimeter. If the fuel is solid or liquid the lower heating value is determined by DIN 51900. From the experimental results the water content has to measured according to ASTM D 4928-12(2018) and the sulphur content and the hydrogen content was measured according to the method described in the examples.

The thermal enthalpy difference of the fluegas between T=298,15 K and the flame temperature by

$$h_{Gas} = \frac{1}{M_{Gas}} \sum_{i=1}^{N} x_i \int_{298.15\,K}^{T_{adiabat}} C_{mp,i}\, dT$$

Equation (10)

The number of species in the product gas stream is denoted by N, the mean molecular weight of the flue gas is denoted by $M_{Gas}$, The mean molecular weight is determined by

$$M_{Gas} = \frac{1}{\sum_{i=1}^{N} x_i M_i}$$

Equation (11)

The lower heating value of the inert species in the product stream is set to 0 J/mol.

To determine the lower heating values of the hydrocarbon containing species of the particulate feedstock one need to determine the water content (ASTM D 4928-12(2018) and the Micro Conradson content according to the ASTM D4530-15 (2020). In addition, ultimate analysis of the particulate feedstock has to be measured according to ASTM D3176-15 (2016) and the gross calorific value according to ASTM D 4809:2018.

The lower heating value of the particulate feedstock is calculated by

$$H_{us} = (H_{os} - (w_s + 9h_s)\Delta_{vap}h_{Water})1/(1-w)$$

Additionally, one can determine the lower heating value of Conradson residue by measuring the gross calorific value and the hydrogen content of the Conradson residue using the same equation. The water content of the Conradson is 0. The lower heating value of the hydrocarbon containing particulate is determined by

$$H_{uR} = H_{us}(1-w) - H_{uConradson}Conradson)/(1-w-Conradson)$$

To determine the C/H ratio of the hydrocarbon part one can obtain from the ultimate analysis of the particulate feedstock and the ultimate analysis of the Conradson

$$\frac{C}{H} = \frac{1}{12} \frac{[c_s(1-w) - Conradson\ c_{Conradson}]}{[h_s(1-w) - Conradson\ h_{Conradson}]}$$

The molar Enthalpy difference for water can be determined by

$$h_{H_2O} = \left( \frac{102318 \frac{J}{mol}}{\exp\left(\frac{4102K}{T}\right) - 1} - 0.109 \frac{J}{mol} + 33.25 \frac{J}{molK}(T - 298.15K) \right) / M_{H_2O}$$

Equation (12)

For CO2 we obtain

$$h_{CO_2} = \left( \frac{56385 \frac{J}{mol}}{\exp\left(\frac{1695K}{T}\right) - 1} - 191.89 \frac{J}{mol} + 29.10 \frac{J}{molK}(T - 298.15K) \right) / M_{CO_2}$$

Equation (13)

For SO2

$$h_{SO_2} = \left( \frac{34594 \frac{J}{mol}}{\exp\left(\frac{1387K}{T}\right) - 1} - 333.37 \frac{J}{mol} + 33.26 \frac{J}{molK}(T - 298.15K) \right) / M_{SO_2}$$

Equation (14)

For N2

$$h_{N_2} = \left( \frac{27423 \frac{J}{mol}}{\exp\left(\frac{3298K}{T}\right) - 1} - 0.43 \frac{J}{mol} + 29.10 \frac{J}{molK}(T - 298.15K) \right) / M_{N_2}$$

Equation (15)

For O2

$$h_{O_2} = \left( \frac{17808 \frac{J}{mol}}{\exp\left(\frac{2141K}{T}\right) - 1} - 13.52 \frac{J}{mol} + 29.10 \frac{J}{molK}(T - 298.15K) \right) / M_{O_2}$$

Equation (16)

For CO

$$h_{CO} = \frac{\left(\dfrac{25113\frac{J}{mol}}{\exp\left(\frac{3020K}{T}\right)-1} - 1\frac{J}{mol} + 29.10\frac{J}{molK}(T-298.15K)\right)}{M_{CO}}$$

Equation (17)

The lower heating value for CO is

$$H_{u,CO} = 282980\frac{J}{mol}$$

For gaseous Rubber products

$$h_{Rubber} = \frac{\left(\dfrac{2218695\frac{J}{mol}}{\exp\left(\frac{1976K}{T}\right)-1} - 2933\frac{J}{mol} + 33.25\frac{J}{molK}(T-298.15K)\right)}{0.212\frac{kg}{mol}} + 500\frac{kJ}{kg}$$

Equation (18)

For particulate rubber we obtain

$$h_{Rubber,s} = 1960J/kgK(T-298.15\ K)$$

Equation (19)

For Conradson

$$h_{Conradson} = \frac{\left(\dfrac{31690\frac{J}{mol}}{\exp\left(\frac{1270K}{T}\right)-1} - 453\frac{J}{mol}\right)}{0.012\ kg/mol}$$

Equation (20)

Exemplary calculation

Combustion of Methane entering the combustion chamber at 3 bar and a temperature of T=290 K

Having a standard volume flow of methane considering a pressure of 101325 Pa and a temperature of T=273.15K of 13 Nm³/h (STP) and Nitrogen with a temperature of T=673.15 K and a pressure of 1.2 bar having a standard volume flow of 118.5 Nm³/h (STP) considering a pressure of 101325 Pa and a temperature of T=273.15K and an standard oxygen flow of 31.5 Nm³/h (STP) referring to standard temperature of T=273.15 K and a standard pressure of P=101325 Pa.

In the choke a mass flow 20 kg/h of rubber granulate is dosed to the system having a temperature of 20 °C and a pressure of 1 bar.

The lower heating value of Methane is according to DIN 51857 at T=298.15 K and P=101325 Pa of 802.6 MJ/kmol. In "Properties of Gases and liquids" you obtain for Methane a heat capacity of

$$Cp(T)=8.314462*(4.568-8.975/10^3*T+3,631/10^5*T^2-3.407/10^8*T^3+1.091/10^{11}*T^4)$$

Equation (22)

Therefore, one obtains the h_f by

$$h_f = 8.314462 * (4.568 * T - 8.975/10\text{^}3 * \frac{T^2}{2} + 3.631/10\text{^}5 * \frac{T^3}{3} - 3.407/10\text{^}8 * \frac{T^4}{4}$$
$$+ 1.091/10\text{^}11 * \frac{T^5}{5} - (4.568 * T_0 - \frac{8.975}{10^3} * \frac{T_0^2}{2} + \frac{3.631}{10^5} * \frac{T_0^3}{3} - \frac{3.407}{10^8} * \frac{T_0^4}{4}$$
$$+ \frac{1.091}{10^{11}} * \frac{T_0^5}{5}))/M_{CH_4}$$

Equation (23)

The temperature of the fuel feed is symbolized by T and given in the example by T=290 K, the reference temperature of the heating value is given by $T_0$=298.15 K.

The enthalpy difference between T=298.15 K and the feeding temperature can be determined by of the inert gas nitrogen can be determined by Eq. (4). For the oxygen we can determine the enthalpy difference by Eq (15).

The heat losses occur on the shell of the reactor according to the measured temperature of the shell the heat transfer can be calculated following VDI Wärmeatlas. The Heat transfer should cover radiation and convection/free convection.

Calculation of the compound mass flows in the reaction zone

In Eq. (4) x=1, y=4 and z=0, w=0, p=0. Therefore, we obtain from 13 $Nm^3$/h of Methane 13 $Nm^3$/h $CO2$ and 26 $Nm^3$/h water. The residual oxygen is determined by the total oxygen flow minus the oxygen flow in forms of $CO_2$ and $H_2O$ ($SO_2$ if sulfur is in the fuel present). The conversion between mass flow and standard volume flow is done for gaseous species by

$$m_p = \frac{M_i V p_i P^0}{R T_0}$$

Equation (24),

$T_0$ is 273.15 K, $P^0$ is 101325 Pa.

Therefore, we obtain of the remaining oxygen flow

$$Vp_{O_2,remaining} = Vp_{O_2} - \frac{Vp_{H_2O}}{2} - Vp_{CO_2} = 31.5 \frac{Nm^3}{h} - \frac{13 Nm^3}{h} - \frac{13 Nm^3}{h} = 5.5 \frac{Nm^3}{h}$$

Equation (25)

The residual oxygen is assumed to be converted by the hydrogen and carbon of the rubber part of the granulate in a ratio of the atomic H/C ratio of the rubber part. Assuming a H/C ratio of 2 we obtain one $H_2O$ and one CO. Therefore, we have to add to the already calculated water flow the following flow of 5.5 $Nm^3$/h of $H_2O$ getting in total 31.5 $Nm^3$/h $H_2O$ and 5.5 $Nm^3$/h of CO. The rubber granulate is transported by 8 $Nm^3$/h nitrogen into the reactor.

These gas flows are converted to mass flows using the equation above leading to:

| | | |
|---|---|---|
| $N_2$ | 158.02 | kg/h |
| $CO_2$ | 25.519 | kg/h |

(continued)

| | | |
|---|---|---|
| $H_2O$ | 20.88 | kg/h |
| CO | 6.87 | kg/h |
| $H_2Oadd$ | 4.42 | kg/h |

The rubber mass flow in the gas phase is calculated from the total rubber granulate flow subtracting the inert species and subtracting the burned rubber mass flow

$$mp_{Rubber,Res} = mp_{RubberGranulate} * (1 - Conradson) - 2\frac{mp_{H_2Oadd}}{18} - 12\frac{mp_{CO}}{28} = 8{,}96\frac{kg}{h}$$

Equation (26)

The Conradson is handled as inert material what can be calculated by

$$mp_{Conradson} = mp_{RubberGranulate} * (Conradson) = 7.6\frac{kg}{h}$$

Equation (27)

Calculation of the heat loss

The heat flux can be calculated by

$$Q_{Loss} = A(\sigma\epsilon(T_w^4 - T_u^4) + \alpha(T_w - T_u)$$

Equation (28)

In case of free convection alpha is calculated by the Nusselt number a function of Rayleigh and Prandtl number Pr.

$$Nu = \frac{\alpha\pi d}{2\lambda} = \left(0.752 + 0.387(Ra\, f(Pr))^{\frac{1}{6}}\right)^2$$

Equation (29)

Using

$$f(Pr) = \left(1 + \left(\frac{0.559}{Pr}\right)^{\frac{9}{16}}\right)^{-\frac{16}{9}}$$

Equation (30)

The Rayleigh number is calculated by

$$Ra = \frac{9.81m}{s^2} * \frac{\frac{\left(\pi * \frac{d}{2}\right)^3}{v^2} \cdot 1}{T_u} * (Tw - T_u) * Pr$$

$$\text{Equation (31)}$$

In coopering all these into the energy balance we obtain

$$mp_{CH_4}\left(h_{CH_4} + H_u\right) + mp_{Conradson}h_{Conradson}\left(T_{RubberGranulate}\right)$$
$$+ mp_{Rubber,s}\left(h_{Rubber}\left(T_{RubberGranulate}\right) + H_{u,Rubber}\right) + mp_{N_2}h_{N_2}(T_{air})$$
$$+ mp_{O_2}h_{O_2}(T_{air}) + mp_T\left(h_T(T_T) + H_{u,T}\right)$$
$$= mp_{Conradson}h_{Conradson}(T) + mp_{Rubber,Res}\left(h_{Rubber}(T) + H_{u,Rubber}+\right)$$
$$+ mp_{CO_2}h_{CO_2}(T) + mp_{CO}(h_{CO}(T) + H_{uCO}) + mp_{H_2O}h_{H_2O}(T) + mp_{N_2}h_{N_2}(T)$$
$$+ Q_{Loss}$$

$$\text{Equation (32)}$$

The Reactor has an outer Area of 15.9 m$^2$. Therefore, we obtain for the given example 1629 °C. The reaction volume is 0.162 m$^3$. The Volume flow of all the species except the mConradson is 1236 m$^3$/h. Therefore, we obtain a residence time by

$$t_r = \frac{V}{Q}$$

$$\text{Equation (1)}$$

of 0,38 s. In the last equation the reactor volume is denoted by V and the Volume Flow of all species except Conradson is Q. In this example all species except Conradson are Rubber, Res $CO_2$ CO $H_2O$ $N_2$.

In general, the residence time is selected in such a way that the C,H-containing material in the particulate carbon-containing feedstock is completely pyrolyzed.

The formation of carbon black is generally terminated by the quench of the hot gas flow. Thus, the method may further comprise (e) quenching the hot gas flow after the injection according to step (d).

The transmittance can be an indicator whether the residence time is sufficient for the feedstock for a complete pyrolysis of e.g. the C,H-containing material in the feedstock. Accordingly, the hot gas flow should be quenched (e) when the transmittance at 425 nm of the obtained carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

The transmittance at 425 nm of the produced carbon black can be measured and the position of the quench can be adjusted until the transmittance at 425 nm of the produced carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

The quench position in the entrained flow reactor can be selected in such a way that the transmittance at 425 nm of the produced carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

Furthermore, a method to adjust the position of the quench in an entrained flow reactor for the production of carbon black from a particulate carbon-containing feedstock, is provided comprising: I) injecting a particulate carbon-containing feedstock in a hot gas flow of an entrained flow reactor, wherein the hot gas flow has a temperature of at least 800 °C, II) quenching the hot gas flow comprising the produced carbon black II) measuring the transmittance of the produced carbon black, III) adjusting the position of the quench in the entrained flow reactor until the transmittance of the produced carbon black is at least 20 %, preferably at least 30 %, more preferably at least 40 %, even more preferably at least 60 %, most preferably at least 80 % wherein the transmittance at 425 nm in toluene is measured according to ASTM D 1618-18 against toluene.

It is particularly preferred that the particulate carbon-containing feedstock is deagglomerated before the injection into the reactor. It is believed that the evaporation time is decreased by using deagglomerated particles.

Accordingly, it is desired that step (b) further comprises deagglomerating the particulate carbon containing feedstock and in step (d), the deagglomerated particulate carbon-containing feedstock is injected in the hot gas flow to form carbon black.

Thus a method for producing carbon black from a particulate carbon containing feedstock in entrained flow reactor having a flow passage along a central longitudinal axis of the reactor should be provided, comprising: (a) providing a hot gas flow, (b) deagglomerating a particulate carbon-containing feedstock to provide deagglomerated a particulate carbon-containing feedstock, and (d) injecting the deagglomerated particulate carbon-containing feedstock in the hot gas flow to form carbon black, wherein the hot gas flow has a temperature of at least 800°C.

The deagglomeration can be achieved by (i) accelerating the particulate carbon-containing feedstock, and/or (ii) applying shear forces, preferably using an extruder. The deagglomeration can be carried out in (i) a feeding and mixing device, preferably comprising a nozzle, and/or (ii) an extruder. The feeding and mixing device is preferably a device according to the invention.

Accelerating of the particulate carbon-containing feedstock results in the deagglomeration of the particles. For example, a carrier gas, such as $N_2$ or air, can be accelerated and the particles are injected into the accelerated carrier gas. In other words, the deagglomeration can be carried out by subjecting the particulate carbon-containing feedstock into a carrier gas jet.

The deagglomeration can be carried out in (i) a feeding and mixing device comprising a Laval nozzle.

The carrier gas and/or the particulate carbon-containing feedstock is preferably accelerated to over 1 Ma, preferably 1.01 Ma to 1.7 Ma, more preferably 1.1 Ma to 1.6 Ma, and most preferably 1.2 Ma to 1.5 Ma. A Mach number of over 1 can be achieved with a jet nozzle such as a Laval nozzle. Ma is the Mach number.

However, flow velocities from 0.01 Ma to 3 Ma, preferably 0.1 Ma to 2 Ma, more preferably 0.2 to 1.8 Ma, and most preferably 0.3 to less than 1 Ma, are also desirable.

The deagglomeration is also achieved by the impact of the accelerated particulate carbon-containing feedstock with an object, such as two particles of the particulate carbon-containing feedstock, or by the impact of particles of the particulate carbon-containing feedstock and a surface such as the inner surface of a deagglomeration conduit.

The deagglomerated particulate carbon-containing feedstock (or the carrier gas comprising the deagglomerated particulate carbon-containing feedstock) can be injected into the reactor at a pressure from 0.5 bar to 2 bar, preferably 0.7 bar to 1.5 bar, more preferably 0.8 to 1.3 bar, and most preferably 0.8 to 1.2 bar. As mentioned above, the pressure should be adjusted according to the injection position of the feedstock. For instance, the pressure in a combustion chamber is higher than the pressure in the choke so that the deagglomerated particulate carbon-containing feedstock or the carrier gas comprising the deagglomerated particulate carbon-containing feedstock should be injected at higher pressures in the combustion chamber.

The deagglomerated particulate carbon-containing feedstock can be comprised in a carrier gas and the carrier gas further comprises $H_2O$ and/or additives. $H_2O$ can prevent the re-agglomeration of the particles in the carrier gas. Thus, the deagglomerated particulate carbon-containing feedstock should be comprised in a carrier gas and the carrier gas can further comprise $H_2O$ in an amount of 1 to 10 vol.-%, preferably 2 to 8 vol.-%, more preferably 3 to 7 vol.-%, based on the total volume of the carrier gas comprising the the deagglomerated particulate carbon-containing feedstock.

The particulate carbon-containing feedstock and/or the deagglomerated carbon-containing feedstock is generally comprised in a carrier gas.

The deagglomeration can be carried out in a feeding and mixing device for particles into a reactor comprising: (i) a carrier gas passage extending through said feeding and mixing device, (ii) at least one carrier gas inlet, which is in fluid communication with said carrier gas passage, (iii) at least one particle inlet, (iv) a mixing chamber which is in fluid communication with said at least one particle inlet and with said carrier gas inlet, (v) a deagglomeration conduit which is in fluid communication with said mixing chamber, (vi) at least one outlet for said carrier gas entraining particles which have been fed into said mixing chamber, wherein said at least one outlet for is in fluid communication with said deagglomeration conduit, and (vii) means for accelerating and injecting a stream of carrier gas into said mixing chamber.

Said gas passage should extend along a longitudinal axis through said feeding and mixing device and preferably said at least one inlet, said mixing chamber, said deagglomeration conduit and said outlet are aligned with said longitudinal axis.

Said particle inlet should be configured to feed particles into said mixing chamber at an angle relative to a carrier gas jet discharged into said mixing chamber, preferably perpendicularly to the carrier gas jet. However, the angle is not particularly limited for the present invention.

Said means for accelerating and injecting the stream of carrier gas may include at least one jet nozzle (nozzle).

The jet nozzle is configured to accelerate the stream of carrier gas. This means that the nozzle (or jet nozzle) is positions so that the nozzle convergent in a flow direction so that the gas stream is accelerated after exiting the nozzle and entering the mixing chamber. In other words, said means for accelerating and injecting said stream of the carrier gas is preferably convergent in a flow direction extending from said at least one carrier gas inlet towards said at least one outlet.

Said jet nozzle can be a Laval-nozzle. Such a Laval nozzle (or nozzle) may comprise (in the following order) a convergent section, a throat and a divergent section. Typically, the convergent section reduces the diameter of the nozzle so that the gas flow is accelerated. The divergent section increases the diameter in this section. However, the diameter increased by the divergent section is still lower than the diameter before the convergent section. Accordingly, a nozzle comprising in the following order a convergent section, a throat and a divergent section, the gas flow is accelerated.

The cross-sectional area is usually circular or elliptical at each point of the jet nozzle.

Said jet nozzle may comprise a divergent section and the angle of divergent section can be from 2 to 30°, preferably 3 to 20°, more preferably 4 to 15°, and most preferably 5 to 10°.

The jet nozzle may comprise a convergent section and the maximum inner diameter of the convergent section can be from 5 and 50 mm, preferably 8 to 40 mm, more preferably 10 to 30 mm, and most preferably 12 to 20 mm.

The minimum inner diameter of the convergent section, divergent section and/or the inner diameter of the throat can be from 0.6 to 30 mm, preferably 1.2 to 18 mm, more preferably 1.9 to 12 mm, and most preferably 3 to 9 mm.

The minimum inner diameter of convergent section, divergent section and the inner diameter of the throat should be the same. In other words, the convergent, the throat and the divergent section are generally directly connected with each other.

The jet nozzle may comprise a divergent section and the maximum inner diameter of the divergent section can be from 0.3 to 11 mm, preferably 0.5 to 7 mm, more preferably 0.9 to 5 mm, and most preferably 1.1 to 4 mm.

The minimum inner diameter of the convergent section should be higher than the maximum inner diameter of the convergent section, preferably the difference of the maximum inner diameters of the convergent section and the divergent section is from 5 to 30 mm, preferably 8 to 20 mm, more preferably 9 to 18 min, and most preferably 10 to 15 mm.

The maximum inner diameter of the convergent section may be higher than the maximum inner diameter of the divergent section.

The distance between the means for accelerating and injecting and the conduit having a constant inner diameter can be from 2 to 20 mm, preferably 2.5 to 15 mm, more preferably 3 to 10 mm, and most preferably 3.5 to 7 mm. A specific distance between the aforementioned components improves the deagglomeration of the particles since the jet stream flows directly into the deagglomeration conduit. Accordingly, turbulences can be avoided and a loss of the velocity of the jet stream is minimised.

It is possible that the means for accelerating and injecting the carrier gas (or nozzle) is positioned in such a way that the means for accelerating and injecting the carrier gas protrudes into the cavity of the inlet funnel of the deagglomeration conduit.

Said deagglomeration conduit normally comprises a conduit having a constant inner diameter. In said conduit having a constant inner diameter the particles collide with each other or the particles collide with the wall of the conduit having a constant inner diameter to further deagglomerate. Said deagglomeration conduit can be configured as a diffuser.

Said deagglomeration conduit can comprise from downstream to upstream an inlet funnel, a conduit having a constant inner diameter and a diffuser nozzle diverging in said flow direction. The nozzle for diverging should continuously increase the inner diameter of the deagglomeration conduit. Accordingly, the carrier gas flow is not interrupted and turbulences are avoided. The angle of said diffuser nozzle can be from 1 to 30°, preferably 2 to 20°, more preferably 3 to 15°, and most preferably 4 to 8°. The angle of said inlet funnel can be from 20 to 80°, preferably 30 to 75°, more preferably 40 to 70°, and most preferably 50 to 65°.

The longitudinal axis of said deagglomeration conduit could coaxial to the longitudinal axis of the feeding and mixing device. The coaxial arrangement improves the overall acceleration as well as deagglomeration.

The inner diameter of the conduit having a constant inner diameter can be from 1 to 20 mm, preferably 2 to 10 mm, more preferably 3 to 7 mm and most preferably 4 to 6 mm. The inner diameter can have an influence of the deagglomeration. Accordingly, the diameter should be selected for the specific particulate feedstock and preferably for the mass flow.

The maximum inner diameter of the diffuser nozzle is higher than the inner diameter of the conduit having a constant inner diameter. The maximum inner diameter of the diffuser nozzle should be from 5 and 50 mm, preferably 8 to 40 mm, more preferably 10 to 30 mm, and most preferably 12 to 20 mm.

The diffuser nozzle and the convergent section of the jet nozzle can have the same maximum inner diameter.

The maximum inner diameter of said diffuser nozzle can be from 5 and 50 mm, preferably 8 to 40 mm, more preferably 10 to 30 mm, and most preferably 12 to 20 mm.

The length of the conduit having a constant inner diameter can be between 3 to 500 mm, preferably 5 to 200 mm, more preferably 10 to 50 mm and most preferably 13 to 30 mm. The length of said conduit can have a beneficial influence of the deagglomeration of the particles (particulate carbon-containing feedstock). A longer conduit generally results in a better deagglomeration.

The length of the diffuser nozzle can be between 10 to 300 mm, preferably 20 to 200 mm, more preferably 25 to 150 mm and most preferably 30 to 100 mm.

The inner diameter of the conduit having a constant inner diameter should be higher than the maximum inner diameter of the outlet of the means for accelerating and injecting a stream of the carrier gas.

The means for accelerating and injecting a stream of carrier gas, the mixing chamber and the deagglomeration conduit should be configured so that the carrier gas jet is discharged in the deagglomeration conduit.

Feeding and mixing device can further comprise at least one hopper upstream said at least one particle inlet.

At least one screw conveyor, such as a screw conveyor, is often present upstream said at least one particle inlet. The screw conveyor should be configured to provide a constant amount of particles such (or particulate carbon-containing feedstock) into the mixing chamber. Accordingly, the supply of the particles can be controlled by the screw conveyor.

The particles mentioned for the feeding and mixing device are the particulate carbon containing feedstock and said reactor is typically an entrained flow reactor for the manufacturing of carbon black.

The feeding and mixing often further comprise a pressure tank for the particles, wherein the pressure tank is in fluid communication with said at least one particle inlet and optionally with said at least one screw conveyor. Preferably two pressure tanks are present, wherein a first pressure tank connected to a second pressure tank. Both pressure tanks can be connected via a valve.

A reactor system can be provided comprising an entrained flow reactor and a feeding and mixing device, wherein said feeding and mixing device is in fluid communication with said reactor. Said feeding and mixing device should be connected to a plurality of inlets of said reactor, preferably by injection lances.

Said feeding and mixing device can be in fluid connection with a choke, a combustion chamber and/or a tunnel upstream a quenching area of an entrained flow reactor. Said reactor can be an entrained flow reactor, preferably a furnace reactor.

A method for injecting a particulate material into a reactor can be provided that comprises the steps of (a) deagglomerating and entraining particles in a carrier gas stream, preferably by using a feeding and mixing device, (b) injecting the carrier gas stream comprising deagglomerated particles obtained in step (a) into said reactor.

The method can be a method for the manufacturing of carbon black and the particulate material is particulate carbon-containing feedstock and the reactor is an entrained flow reactor for the manufacturing of carbon black, preferably a furnace reactor.

Said particulate carbon-containing feedstock can be injected to said entrained flow reactor by a plurality of inlets, preferably by a plurality of injection lances.

The carrier gas stream can be accelerated and flows through a mixing chamber into a deagglomeration conduit.

The deagglomeration can be done by accelerating the particles in a carrier gas stream and collisions of the particles with the inner surface of a deagglomeration conduit.

The carrier gas is generally accelerated to over 1 Ma, preferably 1.01 Ma to 1.7 Ma, more preferably 1.1 Ma to 1.6 Ma, and most preferably 1.2 Ma to 1.5 Ma.

The particles can be subjected in the carrier gas jet, perpendicularly to the carrier gas jet.

The carrier gas stream comprising deagglomerated particles can be injected into the reactor at a pressure from 0.5 bar to 2 bar, preferably 0.7 bar to 1.5 bar, more preferably 0.8 to 1.3 bar, and most preferably 0.8 to 1.2 bar.

The carrier gas further can further comprise $H_2O$ and/or additives. The carrier gas can comprise $H_2O$ in an amount of 1 to 10 vol.-%. The $H_2O$ can prevent the reagglomeration of the particles.

The feeding and mixing device can be used to deagglomerate particles, preferably a particulate carbon-containing feedstock.

Furthermore, carbon black is provided that is produced according to the inventive method. Said carbon black may comprise new carbon black as well as recovered carbon black.

Carbon blacks are included in many polymer compositions, for example for modifying their color, mechanical, electrical, and/or processing properties. Carbon blacks are for instance commonly added to rubber compositions used to fabricate tires or components thereof to impart electrically dissipative properties to the insulating matrix. At the same time, carbon black additives affect the mechanical and elastic properties, such as stiffness, abrasion resistance and hysteresis, which affect to a great extent the performance of the resulting tire, e.g. in terms of its rolling resistance and durability.

According to the present invention, a composition is provided comprising (A) an elastomeric polymer material, and (B) carbon black obtained according to the present invention. It should be noted that the provided article derived from said composition can also be used as a feedstock material.

The term "composition" as used herein refers to a material composed of multiple constituent chemical species or components. An "elastomeric polymer material" is understood as a material essentially consisting of an elastomeric polymer. The term "polymer" is used herein in its common meaning in the art, referring to macromolecular compounds, i.e. compounds having a relatively high molecular mass (e.g. 500 Da or more), the structure of which comprises multiple repetition units (also referred to as "mers") derived, actually or conceptually, from chemical species of relatively lower molecular mass. The term "elastomeric polymer" is used herein in its common meaning in the art, referring to a polymer which is elastic.

Particularly useful as elastomeric polymeric materials (or elastomeric polymer material) for the practice of this invention are elastomers such as rubber materials. The elastomeric polymer material (A) of the composition according to the present invention can comprise one or more than one rubber. The terms "rubber", "rubber material" and "elastomer" may be used interchangeably throughout this description unless otherwise stated. Rubbers that can be used according to the present invention include those containing olefinic unsaturation, i.e. diene-based rubber materials, as well as non-diene-based rubber materials. The term "diene-based rubber materials" is intended to include both natural and synthetic rubbers or mixtures thereof. The elastomeric polymer material (a) can consist of synthetic rubber.

The elastomeric polymer material (A) of the composition according to the present invention can comprise natural and/or synthetic rubber.

Natural rubber can be used in its raw form and in various processed forms conventionally known in the art of rubber processing. Natural rubber can for example be obtained from rubber trees (Helvea brasiliensis), guayule, and dandelion. Accordingly, the elastomeric polymer material (a) can comprise or consist of natural rubber.

Synthetic rubber can comprise styrene-butadiene rubber such as emulsion-styrene-butadiene rubber (ESBR) and solution-styrene-butadiene rubber (SSBR), polybutadiene, polyisoprene, ethylene-propylene-diene rubber (EPDM), ethylene-propylene rubber (EPM), butyl rubber, halogenated butyl rubber, chlorinated polyethylene, chlorosulfonated polyethylene, acrylonitrile-butadiene rubber, hydrogenated acrylonitrile-butadiene rubber, polychloroprene, acrylate rubber, ethylene-vinylacetate rubber, ethylene-acrylic rubber, epichlorohydrin rubber, silicone rubber, fluorosilicone rubber, fluorocarbon rubber or mixture of combinations of any of the foregoing. According to the invention, the synthetic rubber can also be obtained from a renewable source material. For example, polybutadiene can be produced from alcohol obtained through fermentation of plant biomass.

Suitable rubbers may also include functionalized rubbers and rubbers coupled to silicon or tin. For example, rubbers can be functionalized with functional groups like amine, alkoxy, silyl, thiols, thioesters, thioether, sulfanyl, mercapto, sulfide or combinations thereof. The one or more functionalities can be primary, secondary or tertiary and can be located at one or both chain ends (e.g. $\alpha,\omega$-functionalization), pendant from the polymer backbone and/or provided within the chain of the polymer backbone. The rubber according to the invention can also be partially cross-linked. Thus, prior to use in the composition of the present invention, part of the polymer chains of the rubber material can be cross-linked either by means of a coupling agent or without.

The composition according to the invention can in particular be a curable composition, such as for example a vulcanizable rubber composition. The term "vulcanizable rubber composition" refers to a composition of a rubber component optionally with various further ingredients conventionally used in the art of rubber compounding that can be cured by vulcanization under formation of a vulcanizate. The terms "curable" and "vulcanizable" are used interchangeably throughout this description unless otherwise stated and refer to a chemical reaction linking polymer chains to each other by means of a cross-linker or vulcanizing agent. The curing reaction can be induced by any means known in the art such as by light, moisture, heat and/or addition of a crosslinker.

The elastomeric polymer material (A) according to the invention may comprise a natural rubber. According to the invention, the natural rubber can comprise natural rubber obtained from rubber trees (Helvea brasiliensis), guayule, dandelion or mixtures of combinations of any of the foregoing. The natural rubber can comprise natural rubber obtained from guayule and/or dandelion. The elastomeric polymer material (A) can comprise 5 phr or more of natural rubber, such as 10 phr or more, or 15 phr or more, or 20 phr or more, or 30 phr or more, or 40 phr or more, or 50 phr or more, or 60 phr or more, or 70 phr or more, or 80 phr or more. As used herein, the term "phr" refers to parts by weight of the recited respective material per 100 parts by weight of rubber or elastomer. The elastomeric polymer material (A) can comprise 100 phr or less of natural rubber, such as 95 phr or less, or 90 phr or less, or 85 phr or less, or 80 phr or less, or 75 phr, or less 70 phr or less, or 65 phr or less, or 60 phr or less. The elastomeric polymer material (A) can comprise natural rubber in a range between any of the recited lower and upper limits. For example, the elastomeric polymer material (A) can comprise natural rubber in a range of 5 to 95 phr, such as in a range of 10 to 90 phr, or in a range of 20 to 80 phr, or in a range of 30 to 70 phr, or in a range of 40 to 60 phr. According to the present invention, the elastomeric polymer material (A) can consist of natural rubber.

The elastomeric polymer material (A) according to the invention may comprise a synthetic rubber. According to the invention, the synthetic rubber can comprise synthetic rubber obtained from a renewable source material. The renewable source material according to the present invention can be alcohol obtained through fermentation of plant biomass. For example, the synthetic rubber may comprise polybutadiene obtained from alcohol obtained through fermentation of plant biomass. The elastomeric polymer material (A) can comprise 5 phr or more of synthetic rubber, such as 10 phr or more, or 15 phr or more, or 20 phr or more, or 30 phr or more, or 40 phr or more, or 50 phr or more, or 60 phr or more, or 70 phr or more, or 80 phr or more. As used herein, the term "phr" refers to parts by weight of the recited respective material per 100 parts by weight of rubber or elastomer. The elastomeric polymer material (A) can comprise 100 phr or less of synthetic rubber, such as 95 phr or less, or 90 phr or less, or 85 phr or less, or 80 phr or less, or 75 phr, or less 70 phr or less, or 65 phr or less, or 60 phr or less. The elastomeric polymer material (A) can comprise synthetic rubber in a range between any of the recited lower and upper limits. For example, the elastomeric polymer material (A) can comprise synthetic rubber in a range of 5 to 95 phr, such as in a range of 10 to 90 phr, or in a range of 20 to 80 phr, or in a range of 30 to 70 phr, or in a range of 40 to 60 phr. According to the present invention, the elastomeric polymer material (A) can consist of synthetic rubber.

According to the present invention, the elastomeric polymer material (A) may comprise a mixture of natural rubber and synthetic rubber. The elastomeric polymer material (A) can comprise from 5 to 100 phr of natural rubber and from 5 to 100 phr of synthetic rubber, such as from 10 to 90 phr of natural rubber and from 10 to 90 phr of synthetic rubber, or from 20 to 80 phr of natural rubber and from 20 to 80 phr of synthetic rubber, or from 30 to 70 phr of natural rubber and from 30 to 70 phr of synthetic rubber, or from 40 to 60 phr of natural rubber and from 40 to 60 phr of synthetic rubber, or from 40 to 100 phr of natural rubber and from 5 to 60 phr of synthetic rubber, or from 50 to 95 phr of natural rubber and from 5 to 50 phr of synthetic rubber, or from 60 to 90 phr of natural rubber and from 10 to 50 phr of synthetic rubber, or from 5 to 40 phr of natural rubber and from 60 to 100 phr of synthetic rubber, or from 10 to 20 of natural rubber and from 80 to 90 phr. For example, the elastomeric polymer material (A) may comprise 50 phr of natural rubber and 50 phr of synthetic rubber or the elastomeric polymer material (A) may comprise 5 phr of natural rubber and 95 phr of synthetic rubber.

The synthetic rubber according to the present invention preferably comprises emulsion-styrene-butadiene rubber (ESBR), polybutadiene, polyisoprene, butyl rubber, halogenated butyl rubber or mixture of combinations of any of the foregoing, more preferable polyisoprene and/or polybutadiene, even more preferably polybutadiene. The synthetic rubber according to the present invention preferably consists of emulsion-styrene-butadiene rubber (ESBR), polybutadiene, polyisoprene, butyl rubber, halogenated butyl rubber or mixture of combinations of any of the foregoing, more preferable polyisoprene and/or polybutadiene, even more preferably polybutadiene. The synthetic rubber can comprise emulsion-styrene-butadiene rubber (ESBR), polybutadiene, polyisoprene, butyl rubber, halogenated butyl rubber or mixture of combinations of any of the foregoing, preferably polyisoprene or polybutadiene, more preferably polybutadiene. The synthetic rubber can comprise or consist polybutadiene, polyisoprene, butyl rubber, halogenated butyl rubber or mixture of combinations of any of the foregoing, preferably polyisoprene or polybutadiene, more preferably polybutadiene. The synthetic rubber can comprise or consist polybutadiene, polyisoprene, halogenated butyl rubber or mixture of combinations of any of the foregoing, preferably polyisoprene or polybutadiene, more preferably polybutadiene.

The produced carbon black can also be pulverized before being added to the composition. Thus, the composition can comprise pulverized carbon black.

The composition can comprise 3 to 200 phr of the carbon black obtained according to the present invention (B), preferably 5 to 190 phr of the carbon black obtained according to the present invention (B), more preferably 10 to 150 phr of the carbon black obtained according to the present invention (B), even more preferably 20 to 130 phr of the carbon black obtained according to the present invention (B), most preferably 30 to 100 phr of the carbon black (B) obtained according to the present invention.

The composition can comprise one or more additives selected from vulcanization agents, curing aids such as primary and secondary vulcanization accelerators, activators and pre-vulcanization inhibitors, processing additives such as oils, waxes, resins, plasticizers, softeners, rheology modifiers, pigments, peptizing agents, coupling agents, surfactants, biocides and anti-degradants, such as heat or light stabilizers, anti-oxidants and anti-ozonates, metal oxides, metal hydroxides, and filler materials such as silica, organo-silica, carbon nanotubes, carbon fibers, graphite and metal fibers.

The composition of the present invention can be obtained and processed by common elastomer processing technology. The composition according to the present invention can for example be obtained by combining the carbon black (B) of the present invention and any optional ingredients, if used, with the elastomeric polymer material (A) and mixing the same, e.g. to disperse the carbon black (B) and any optional ingredients, if used, in the elastomeric polymer material (A). Dispersion can be achieved by any means known in the art such as by mixing, stirring, milling, kneading, ultrasound, a dissolver, a shaker mixer, rotor-stator dispersing assemblies, or high-pressure homogenizers or a combination thereof. For example, a lab mixer with intermeshing rotor geometry can be used. The dispersing can for example be conducted until the carbon black (B) is homogeneously dispersed in the elastomeric polymer material (A) resulting in a dispersion index of larger than 95% or more, preferably 97% or more, or more than 99% according to the classification pursuant to ASTM D2663-88, test method B.

Preparation of the composition according to the present invention may for example be conducted in a multiple step process: At first, the carbon black (B) and optionally non-curative additives, if used, may be added to the elastomeric polymer material (A) concomitantly or successively. The elastomeric polymer material (A), the carbon black (B) and the additives, if used, may then be mixed, typically at a temperature in a range from 40°C to 160°C for a total mixing time of less than 10 min, such as in a range from 2 to 8 min. Subsequently, the obtained mixture may be blended with one or more curative additives for less than 5 min, typically less than 3 min, preferably for about 2.5 min, at a temperature of less than 115°C.

The process can comprise further steps such as extrusion or cooling down the product to room temperature and storing it for further processing. The process can further comprise a curing step, which can for example be carried out by subjecting the composition to thermal curing conditions, e.g. a temperature of 120-200°C for a time of 5 minutes to 3 hours. Curing can for instance be carried out in a curing press for example at a temperature of 140-180°C for 5 to 60 minutes at a pressure between 100 and 150 bar.

As it will be appreciated, the compositions according to the invention can be utilized in various technical applications requiring polymer-based materials with carbon black filler, e.g. for imparting antistatic or electrically conductive properties, color, mechanical reinforcement and/or low hysteresis properties. Mechanical properties that are of interest, particularly for the production of tires, include tear resistance, rebound and hysteresis. The compositions according to the present invention provide cured compositions which have good and beneficial mechanical properties, especially for the production of tires. Beneficial mechanical properties in accordance with the present invention are for example high tensile strength, high rebound and low hysteresis. The composition according to the present invention provide cured compositions having mechanical properties which are comparable to rubber compositions comprising conventional carbon blacks.

Accordingly, the invention also relates to articles and particularly tires made of or comprising the afore-mentioned composition according to the invention. The tire according to the present invention may comprise a tread, carcass, sidewall, inner liner, apex, shoulder, hump strip, chafer and/or a bead filler, wherein at least one of the foregoing is made of or comprises a composition according to the invention. Such tires include for example, without being limited thereto, truck tires, passenger tires, off-road tires, aircraft tires, agricultural tires, and earth-mover tires. The describes tires and/or components of the tire can also be used as the rubber granulate.

The tire can comprise a sidewall, wherein the sidewall is made of the composition according to the invention, wherein the composition preferably comprises: (A) from 40 to 60 phr of natural rubber and from 40 to 60 phr of synthetic rubber, preferably from 50 to 60 phr of natural rubber and from 40 to 50 phr of synthetic rubber, more preferably 55 phr of natural rubber and 45 phr of synthetic rubber wherein the synthetic rubber preferably comprises polybutadiene, more preferably consists of polybutadiene; and (B) from 30 to 70 phr of the carbon black, preferably from 40 to 60 phr of the comprise a tread, carcass, sidewall, inner liner, apex, shoulder, hump strip, chafer and/or a bead filler, wherein at least carbon black, preferably 50 phr of the carbon black.

The tire can comprise a carcass, wherein the carcass is made of the composition according to the invention, wherein the composition preferably comprises: (A) from 40 to 80 phr of natural rubber and from 20 to 60 phr of synthetic rubber, preferably from 50 to 70 phr of natural rubber and from 30 to 50 phr of synthetic rubber, more preferably 60 phr of natural rubber and from 40 phr of synthetic rubber wherein the synthetic rubber preferably comprises polybutadiene and emulsion-styrene-butadiene rubber (ESBR), more preferably comprises 20 phr of polybutadiene and 20 phr of emulsion-styrene-butadiene rubber (ESBR); and (B) from 5 to 70 phr of the carbon black, preferably from 40 to 60 phr of the carbon black, more preferably 50 phr of the carbon black.

The tire comprises a chafer, wherein the chafer is made of the composition according to the invention, wherein the composition preferably comprises: (A) from 30 to 70 phr of natural rubber and from 30 to 70 phr of synthetic rubber, preferably from 40 to 60 phr of natural rubber and from 40 to 60 phr of synthetic rubber, more preferably 50 phr of natural rubber and 50 phr of synthetic rubber, wherein the synthetic rubber preferably comprises emulsion-styrene-butadiene rubber (ESBR), more preferably consists of emulsion-styrene-butadiene rubber (ESBR); and (B) from 55 to 95 phr of the carbon black, preferably from 65 to 85 phr of the carbon black, preferably 75 phr of the carbon black.

The tire can comprise a bead filler and/or an apex, wherein the bead filler and/or apex is/are made of the composition according to the invention, wherein the composition preferably comprises: (A) from 80 to 100 phr of natural rubber, preferably from 90 to 100 phr of natural rubber, more preferably 100 phr of natural rubber; and (B) from 35 to 75 phr of the carbon black, preferably from 45 to 65 phr of the carbon black, more preferably from 55 phr of the carbon black.

The tire can comprise an inner liner, wherein the inner liner is made of the composition according to the invention, wherein the composition preferably comprises (A) from 80 to 100 phr of synthetic rubber, preferably from 90 to 100 phr of synthetic rubber, more preferably 100 phr of synthetic rubber, wherein the synthetic rubber preferably comprises a halogenated butyl rubber, more preferably consists of a halogenated butyl rubber; and (B) from 40 to 80 phr of the carbon black, preferably from 50 to 70 phr of the carbon black, more preferably from 60 phr of the carbon black.

The tire can comprise a tread, preferably a truck tire, wherein the tread is made of the composition according to the invention, wherein the composition preferably comprises (A) from 60 to 95 phr of natural rubber and from 5 to 40 phr of synthetic rubber, preferably from 70 to 85 phr of natural rubber and from 15 to 30 phr of synthetic rubber, more preferably from 80 phr of natural rubber and 20 phr of synthetic rubber, wherein the synthetic rubber preferably comprises polybutadiene, more preferably consists of polybutadiene; and (B) from 30 to 70 phr of the carbon black, preferably from 40 to 60 phr of the carbon black, more preferably from 50 phr of the carbon black.

The tire can comprise a tread, preferably a passenger car tire, wherein the tread is made of the composition according to the invention, wherein the composition preferably comprises (A) from 80 to 100 phr of synthetic rubber, preferably from 90 to 100 phr of synthetic rubber, more preferably 100 phr of synthetic rubber, wherein the synthetic rubber preferably comprises solution-styrene-butadiene rubber (SSBR) and polybutadiene, more preferably comprises 70 phr of solution-styrene-butadiene rubber (SSBR) and 30 phr of polybutadiene; and (B) from 35 to 75 phr of the carbon black, preferably from 45 to 65 phr of the carbon black, more preferably 55 phr of the carbon black.

The tire can comprise a tread, preferably a passenger car tire, wherein the tread is made of the composition according to the invention, wherein the composition preferably comprises (A) from 80 to 100 phr of synthetic rubber, preferably from 90 to 100 phr of synthetic rubber, more preferably 100 phr of synthetic rubber, wherein the synthetic rubber preferably comprises solution-styrene-butadiene rubber (SSBR) and polybutadiene, more preferably comprises 70 phr of solution-styrene-butadiene rubber (SSBR) and 30 phr of polybutadiene; and (B) from 3 to 25 phr of the carbon black, preferably from 5 to 15 phr of the carbon black, more preferably 5 phr of the carbon black; and (C) from 60 to 100 phr of silica, preferably from 70 to 90 phr of silica, more preferably 80 phr of silica.

The tire can comprise a tread, preferably an Off-the-road (OTR) tire, wherein the tread is made of the composition according to the invention, wherein the composition preferably comprises (A) from 80 to 100 phr of natural rubber, preferably from 90 to 100 phr of natural rubber, more preferably 100 phr of natural rubber; and (B) from 35 to 75 phr of the carbon black, preferably from 45 to 75 phr of the carbon black, more preferably from 55 phr of the carbon black.

The article can be a cable sheath, a tube, a drive belt, a conveyor belt, a roll covering, a shoe sole, a hose, a sealing member, a profile, a damping element, a coating or a colored or printed article.

Moreover, the article can be a conveyor belt, wherein the conveyor belt is made of the composition according to the invention, wherein the composition preferably comprises (A) from 60 to 95 phr of natural rubber and from 5 to 40 phr of synthetic rubber, preferably from 70 to 85 phr of natural rubber and from 15 to 30 phr of synthetic rubber, more preferably 80 phr of natural rubber and from 20 phr of synthetic rubber, wherein the synthetic rubber preferably comprises polybutadiene, more preferably consists of polybutadiene; and (B) from 30 to 70 phr of the carbon black, preferably from 40 to 60 phr of the carbon black, more preferably from 50 phr of the carbon black.

Furthermore, the present invention relates to the use of the aforementioned composition according to the present invention for producing a tire, preferably a pneumatic tire, a tire tread, a belt, a belt reinforcement, a carcass, a carcass reinforcement, a sidewall, inner liner, apex, shoulder, hump strip, chafer, a bead filler, a cable sheath, a tube, a drive belt, a conveyor belt, a roll covering, a shoe sole, a hose, a sealing member, a profile, a damping element, a coating or a colored or printed article.

Moreover, the present invention uses deagglomerated particulate carbon-containing feedstock for the manufacturing of carbon black in an entrained flow reactor.

The invention will now be described with reference to the accompanying figures which do not limit the scope and ambit of the invention. The description provided is purely by way of example and illustration. However, specific features exemplified in the figures can be used to further restrict the scope of the invention and claims.

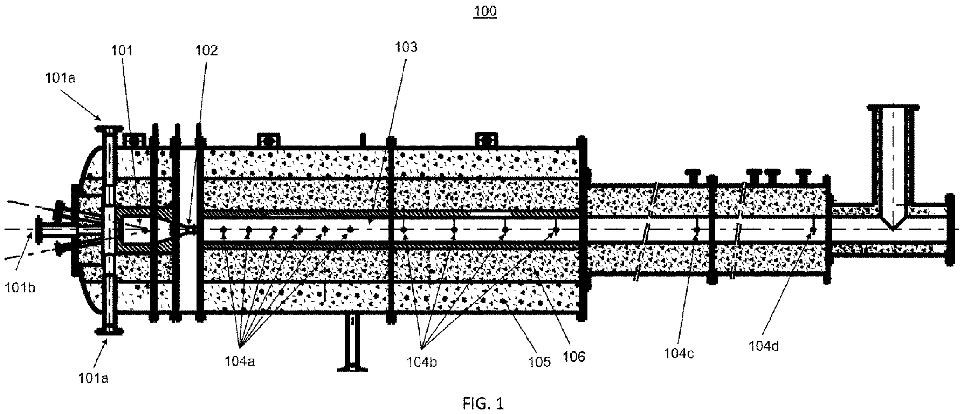

In FIG. 1 a furnace reactor (100) is shown that comprises a combustion chamber (101), a choke (102) and a tunnel (103). The reactor has an inner lining (106) as well as an outer lining (105). The combustion chamber (101) comprises means to inject a fuel (101b) and oxygen-containing gas (101a). In the figure, the oxygen-containing gas is injected into the combustion chamber (101) tangential or radial via oxygen containing gas means (101a) and the fuel is injected into the combustion chamber (101) axial via fuel injection means (101b). It is preferred that the oxygen-containing gas is preheated to a temperature described in the description. It is possible to adjust the temperature of the hot gas flow with the preheating of the oxygen-containing gas. Alternatively, the fuel can be preheated. In the combustion chamber (101) the fuel is combusted in the presence of the oxygen-containing gas. After the combustion, the temperature of the hot carrier gas is above 800 °C to bring the particulate carbon-containing feedstock to the required temperature for the pyrolysis. The particulate carbon containing feedstock can be injected directly in the combustion chamber (101), in the choke (102) or in the tunnel (103). The particulate carbon containing feedstock can also be injected in any of the aforementioned combinations such as in the choke (102) as well as in the tunnel (103). The furnace reactor (100) comprises multiple positions for the quench (104a, 104b, 104c, 104d). The quench medium that is usually water reduces the temperature of the hot gas flow (or the product mixture) so that the reaction for forming the carbon black is terminated. Accordingly, the position of the quench has an influence of the residence time of the feedstock as well as the components derived from the feedstock. This means that residence time is increased if the quench position is adjusted further downstream the reactor. For instance, a quench at a position (104a) near the choke (102) results in a low residence time and a quench at a position (104c) downstream the reactor results in a high residence time. The reaction volume is the volume of the reactor between the injection of the feedstock and the position of the quench. If the feedstock is injected in the tunnel (103) and the distance between the position of the quench and the injection of the feedstock is 4200 mm, and the diameter of the tunnel is 200m, the resulting reaction volume is 132 L. The feeding rate of the particulate carbon containing feedstock should be adjusted depending on the reaction volume as mentioned in the description. For the present invention, a quench position at the back part of the tunnel is particularly preferred so that the particulate carbon containing feedstock has sufficient time for the evaporation or pyrolysis.

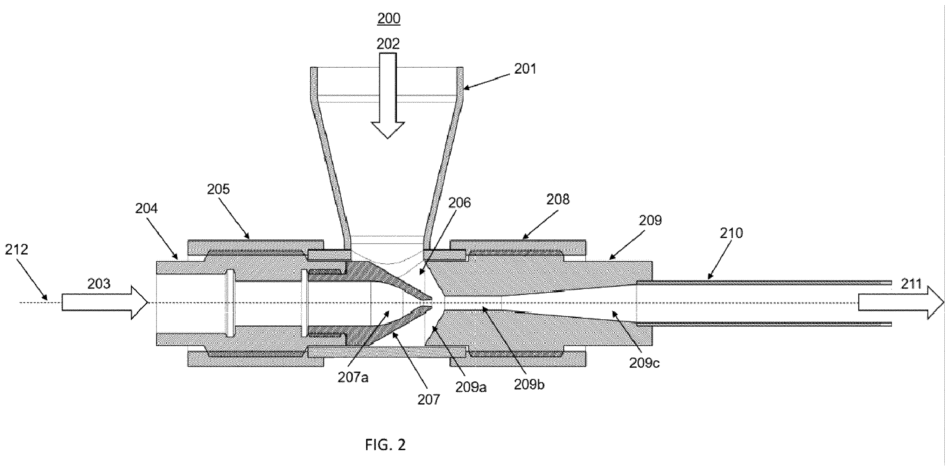

Referring to FIG. 2, a feeding and mixing device (200) is shown that comprises a carrier gas inlet (204), a particle inlet (201), means for accelerating and injecting a stream of carrier gas (207), a deagglomeration conduit (209), a mixing chamber (206) and an outlet for said carrier gas entraining particles (210). The carrier gas passage (212) is also indicated in FIG. 2. The carrier gas passage (212) extends along a longitudinal axis through said feeding and mixing device. The carrier gas (203) enters the feeding and mixing device (200) through the carrier gas inlet (204) and is accelerated in the means for accelerating and injecting a stream of carrier gas (207). In FIG. 2, the means for accelerating and injecting a stream of carrier gas (207) is configured as a Laval-nozzle. The Laval-nozzle comprises a convergent area (207a) in the flow direction. The resulting carrier gas jet is injected into the mixing chamber (206). The particles such as the particulate carbon-containing feedstock (202) are perpendicularly injected into the mixing chamber (206). Accordingly, the particles will be entrained in the accelerated carrier gas. The abrupt acceleration of the particles results in a deagglomeration of the particles. The accelerated carrier gas comprising the particles are further injected into the deagglomeration conduit (209). In the deagglomeration conduit (209) the particles collide with each other or the inner wall or inner surface of the deagglomeration conduit (209) thereby a further deagglomeration is achieved. It is desired that the means for accelerating and injecting a stream of carrier gas (207) is configured in such a way that the carrier gas jet is directly injected into the deagglomeration conduit (209). Accordingly, a loss of the velocity can be minimized. The deagglomeration conduit (209) normally comprises from downstream to upstream (in the flow direction) an inlet funnel (209a), a conduit having a constant inner diameter (209b) and a diffuser nozzle diverging in said flow direction (209c). The inlet funnel (209a) further allows an optimal flow behavior into the conduit having a constant inner diameter (209b). The diffuser nozzle diverging in said flow direction (209c) is also beneficial for the flow behavior. The outlet (406) can be connected to the means for injecting the feedstock into a reactor according to FIG. 1. It is preferred that one feeding and mixing device (200) supplies the deagglomerated feedstock to multiple means for injecting the feedstock into the reactor. It is further desired that the feeding and mixing device (200) comprises a screw conveyor that is connected with the particle inlet (201). The screw conveyor can provide a suitable amount or weight of particles into the mixing chamber (206). Furthermore, the feeding and mixing device (200) can be operated under pressure such as 1.5 bar or 2 bar. A pressure tank for the particles (e.g. particulate carbon containing feedstock) can be installed. Such a pressure tank is in fluid connection with the particle inlet (201) and is preferably connected with the feeding and mixing device (200) via a valve. Preferably two pressure tanks are present, wherein a first pressure tank connected to a second pressure tank. Both pressure tanks can be connected via a valve.

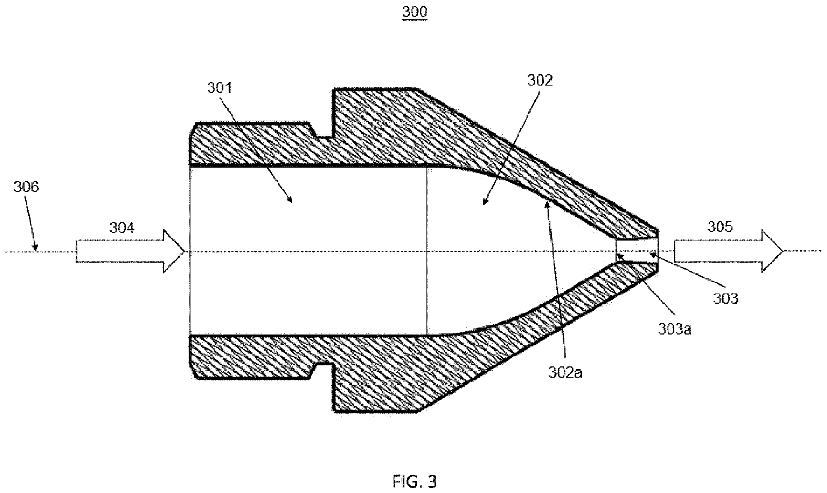

In FIG. 3, a Laval-nozzle (300) for use in feeding and mixing device (200) is shown. The carrier gas passage (306) extends along a longitudinal axis through said Laval-nozzle (300). The carrier gas (304) enters the Laval-nozzle (300) and is accelerated. The carrier gas jet (305) then leaves the Laval-nozzle (300). The Laval-nozzle (300) comprises a section that has a constant diameter (301), a section that converges (302a) in the flow direction (302), a throat (303a) and a divergent section (303). In the Laval-nozzle (300) the carrier gas is accelerated to a velocity of over 1 Ma.

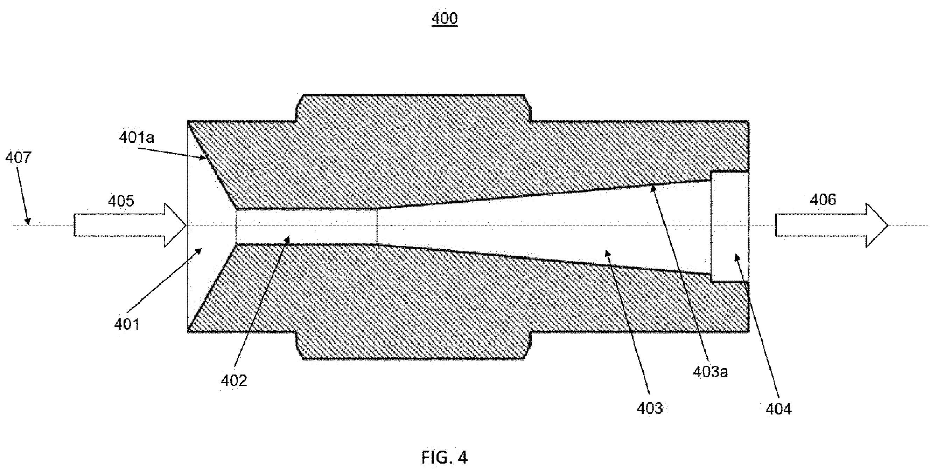

In FIG. 4, the deagglomeration conduit (400) for use in feeding and mixing device (200) is shown. The carrier gas passage (407) extends along a longitudinal axis through said deagglomeration conduit (400). The deagglomeration conduit (400) comprises an inlet funnel (401), a conduit having a constant inner diameter (402) and a diffuser nozzle (403) diverging in said flow direction (403a). Furthermore, an outlet (404) is shown that can be connected to means to inject the deagglomerated particles (e.g. deagglomerated particulate carbon containing particles) (406) into the reactor.

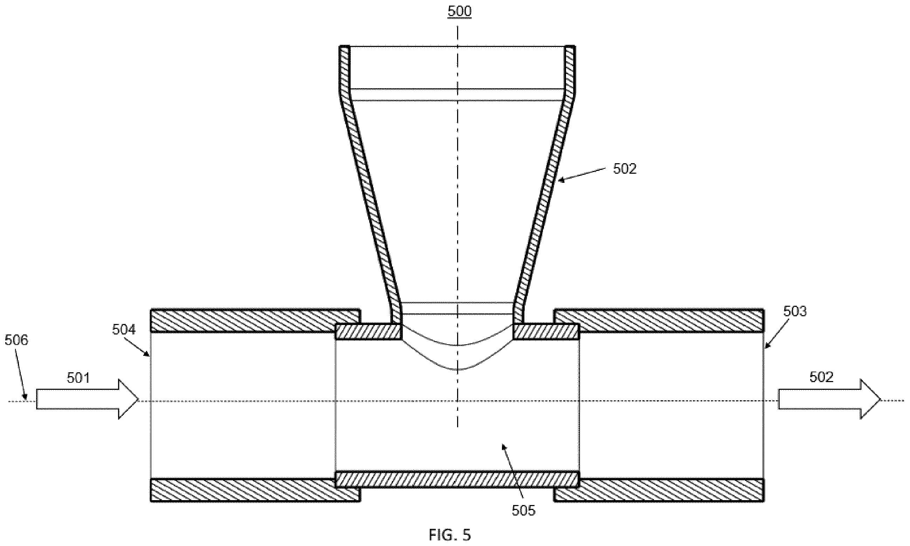

In FIG. 5, an alternative feeding and mixing device (500) is shown. The carrier gas passage (506) is also indicated in FIG. 5. The carrier gas passage (506) extends along a longitudinal axis through said feeding and mixing device. Said feeding and mixing device (500) comprises an inlet (504) for the carrier gas (501), a mixing chamber (505), an inlet for particles (502), and an outlet (503). A carrier gas (501) enters the feeding and mixing device (500). The carrier gas (501) should have a desirable velocity such as below 1 Ma or between 2 m/s to 1 Ma or between 20 m/s to 200 m/s. The particles such as the particulate carbon-containing feedstock (202) are perpendicularly injected into the mixing chamber (507). Accordingly, the particles will be entrained in the accelerated carrier gas. The abrupt acceleration of the particles results in a deagglomeration of the particles. The outlet (503) can be connected to a reactor. Similar to the feeding and mixing device (200), a screw conveyor and at least one pressure tank can be installed.

In addition, the present invention will be described by means of the following aspects.

Aspect 1. A method for producing carbon black from a particulate carbon-containing feedstock in entrained flow reactor having a flow passage along a central longitudinal axis of the reactor, comprising:

(a) providing a hot gas flow,

(b) providing a particulate carbon-containing feedstock, and

(d) injecting the particulate carbon-containing in the hot gas flow to form carbon black,

wherein the hot gas flow has a temperature of at least 800 °C.

Aspect 2. The method according to aspect 1, wherein step (b) further comprises deagglomerating the particulate carbon-containing and in step (d), the deagglomerated particulate carbon-containing feedstock is injected in the hot gas flow to form carbon black.

Aspect 3. A method for producing carbon black from a particulate carbon-containing feedstock in entrained flow reactor having a flow passage along a central longitudinal axis of the reactor, comprising:

(a) providing a hot gas flow,

(b) deagglomerating a particulate carbon-containing feedstock to provide deagglomerated a particulate carbon-containing feedstock, and

(d) injecting the deagglomerated particulate carbon-containing feedstock in the hot gas flow to form carbon black,

wherein the hot gas flow has a temperature of at least 800°C.

Aspect 4. The method according to any one of the preceding aspects, wherein the particulate carbon-containing feedstock comprises inert compounds, coke, C,H-containing compounds, and/or carbon black, preferably ash and carbon black.

Aspect 5. The method according to any one of the preceding aspects, wherein the particulate carbon-containing feedstock further comprises inert compounds, wherein the inert compounds comprise zinc, silicon, calcium, aluminium, and/or iron.

Aspect 6. The method according to any one of the preceding aspects, wherein the particulate carbon-containing feedstock comprises 1 to 40 wt.-% inert compounds, preferably 3 to 30 wt.-% inert compounds, more preferably 4 to 20 wt.-% inert compounds, and most preferably 5 to 15 wt.-% inert compounds, based on the total weight of the particulate carbon-containing feedstock.

Aspect 7. The method according to any one of the preceding aspects, wherein the particulate carbon-containing feedstock further comprises carbon black, wherein the carbon black is present in the particulate carbon-containing feedstock in an amount from 1 to 70 wt.-%, preferably 2 to 50 wt.-%, more preferably 5 to 40 wt.-%, and most preferably 10 to 30 wt.-%, based on the total weight of the particulate carbon-containing feedstock.

Aspect 8. The method according to any one of the preceding aspects, wherein the particulate carbon-containing feedstock comprises 10 to 100 wt.-% of C,H-containing compounds, preferably 20 to 99 wt.-% of C,H-containing compounds, more preferably 30 to 90 wt.-% of C,H-containing compounds, and most preferably 40 to 70 wt.-% of C,H-containing compounds, based on the total weight of the particulate carbon-containing feedstock.

Aspect 9. The method according to any one of the preceding aspects, wherein the particulate carbon-containing feedstock comprises rubber granulate, plastic granulate, and/or biomass-based granulate.

Aspect 10. The method according to any one of the preceding aspects, wherein the particulate carbon-containing feedstock comprises rubber granulate, wherein the rubber granulate comprising carbon black.

Aspect 11. The method according to any one of the preceding aspects, wherein the particulate carbon-containing feedstock comprises agglomerated feedstock.

Aspect 12. The method according to any one of the preceding aspects, wherein at least 50 wt.-%, preferably at least 60 wt.-%, more preferably at least 70 wt.-%, most preferably at least 80 wt.-%, of the particulate carbon-containing feedstock has a particle size of 125 $\mu$m to 2 mm, preferably 125 $\mu$m to 1 mm, more preferably 250 $\mu$m to 1 mm, and most preferably 500 $\mu$m to 1000 $\mu$m, wherein the particle size is measured according to ASTM D 1511-12 (2017).

Aspect 13. The method according to any one of the preceding aspects, wherein the particle size distribution of the particulate carbon-containing feedstock is measured according to ASTM D 1511-12 (2017) and

(a) Sieve No. 10 retains 1 to 0 to 10 wt.-%, preferably 1 to 8 wt.-%, more preferably 1 to 5 wt.-%, and most preferably 1 to 3 wt.-% of the particulate carbon-containing feedstock, and/or
(b) Sieve No. 18 retains 1 to 25 wt.-%, preferably 2 to 20 wt.-%, more preferably 4 to 15 wt.-%, and most preferably 5 to 12 wt.-% of the particulate carbon-containing feedstock, and/or
(c) Sieve No. 35 retains 10 to 80 wt.-%, preferably 15 to 70 wt.-%, more preferably 20 to 60 wt.-%, and most preferably 25 to 55 wt.-% of the particulate carbon-containing feedstock, and/or
(d) Sieve No. 60 retains 5 to 70 wt.-%, preferably 10 to 60 wt.-%, more preferably 15 to 50 wt.-%, and most preferably 20 to 45 wt.-% of the particulate carbon-containing feedstock, and/or
(e) Sieve No. 120 retains 1 to 80 wt.-%, preferably 7 to 70 wt.-%, more preferably 5 to 60 wt.-%, and most preferably 7 to 50 wt.-% of the particulate carbon-containing feedstock, and/or
(f) Bottom receive pan comprises less than 4 wt.-%, preferably less than 3 wt.-%, more preferably 0 to 2 wt.-%, and most preferably 0.01 to 1 wt.-% of the particulate carbon-containing feedstock.

Aspect 14. The method according to any one of the preceding aspects, wherein no more than 10 wt.-%, preferably no more than 5 wt.-%, more preferably no more than 4 wt.-%, and most preferably no more than 2 wt.-% of the particulate carbon-containing feedstock has a particle size of over 4 mm, preferably over 2 mm, more preferably over 1 mm, and most preferably over 0.5 mm, wherein the particle size is measured according to ASTM D 1511-12 (2017).

Aspect 15. The method according to any one of the preceding aspects, wherein no more than 10 wt.-%, preferably no more than 5 wt.-%, more preferably no more than 4 wt.-%, and most preferably no more than 2 wt.-% of the particulate carbon-containing feedstock has a particle size of less than 150 $\mu$m, preferably less than 125 $\mu$m, more preferably less than 110 $\mu$m, and most preferably less than 100 $\mu$m, wherein the particle size is measured according to ASTM D 1511-12 (2017).

Aspect 16. The method according to any one of the preceding aspects, wherein the 50 wt.-% cumulative particle size of the particulate carbon-containing feedstock is from 100 $\mu$m to 4 mm preferably 100 $\mu$m to 3 mm, more preferably 100 $\mu$m to 2 mm, and most preferably 100 $\mu$m to 500 $\mu$m, wherein the 50 wt.-% cumulative particle size is measured according to ASTM D 1511-12 (2017).

Aspect 17. The method according to any one of the preceding aspects, wherein the weight average particle size Dw50 of the particulate carbon-containing feedstock is from 100 $\mu$m to 4 mm preferably 100 $\mu$m to 3 mm, more preferably 100 $\mu$m to 2 mm, and most preferably 100 $\mu$m to 500 $\mu$m, wherein the weight average particle size Dw50 is measured according to ASTM D 1511-12 (2017).

Aspect 18. The method according to any one of the preceding aspects, wherein the particle size distribution Dw10 of the particulate carbon-containing feedstock is from 100 $\mu$m to 250 $\mu$m preferably 110 $\mu$m to 220 $\mu$m, more preferably 120 $\mu$m to 210 $\mu$m, and most preferably 130 $\mu$m to 200 $\mu$m, wherein the particle size distribution Dw10 is measured according to ASTM D 1511-12 (2017).

Aspect 19. The method according to any one of the preceding aspects, wherein the particle size distribution of the particulate carbon-containing feedstock Dw90 is from 400 $\mu$m to 4 mm preferably 500 $\mu$m to 3 mm, more preferably 600 $\mu$m to 2 mm, and most preferably 700 $\mu$m to 500 $\mu$m, wherein the particle size distribution Dw90 is measured according to ASTM D 1511-12 (2017).

Aspect 20. The method according to any one of the preceding aspects, wherein the span of the particle size distributions of the particulate carbon-containing feedstock (Dw90-Dw10) / Dw50 is 0.2 to 1.8, preferably 0.3 to 1.3, more preferably 0.4 to 1.1, most preferably 0.4 to 1.0, wherein the particle size distributions Dw10, Dw50, and Dw90 are measured according to ASTM D 1511-12 (2017).

Aspect 21. The method according to any one of the preceding aspects, wherein the method for producing carbon black does not utilize liquid carbon-containing feedstock for the production of carbon black.

Aspect 22. The method according to any one of the preceding aspects, wherein the hot gas flow is obtained by electrical preheating, plasma heating and combustion of a fuel and oxygen-containing gas.

Aspect 23. The method according to any one of the preceding aspects, wherein the hot gas flow is provided by

(a1) supplying fuel and oxygen-containing gas into a combustion chamber of the reactor,

(b2) combusting fuel in the combustion chamber to produce the hot gas flow.

Aspect 24. The method according to any one of the preceding aspects, wherein the entrained flow reactor is a furnace reactor.

Aspect 25. The method according to any one of aspects 22 to 24, wherein the particulate carbon-containing feedstock is injected in the combustion chamber, in the choke, and/or in the tunnel of the furnace reactor, preferably in the choke of the furnace reactor.

Aspect 26. The method according to any one of the preceding aspects, wherein the hot gas flow has a temperature of 900 to 3500 °C, preferably 950 to 3000 °C, more preferably 1000 to 2000 °C, and most preferably 1200 to 1900 °C.

Aspect 27. The method according to any one of aspects 22 to 26, wherein the oxygen-containing gas is preheated to a temperature between 200 to 1600 °C, preferably 350 to 1400 °C, more preferably 500 to 1200 °C, and most preferably 450 to 950 °C.

Aspect 28. The method according to any one of aspects 22 to 27, wherein the fuel is preheated to a temperature between 50 to 750 °C, preferably 100 to 700 °C, more preferably 300 to 700 °C, and most preferably 450 to 650 °C.

Aspect 29. The method according to any one of aspects 22 to 28, wherein the supplied oxygen-containing gas is air, oxygen-enriched air or oxygen gas.

Aspect 30. The method according to any one of aspects 22 to 29, wherein the fuel comprises a gaseous or liquid hydrocarbons, preferably natural gas, a fuel oil or $H_2$.

Aspect 31. The method according to any one of aspects 22 to 30, wherein the oxygen-containing gas is supplied in an amount yielding an excess of oxygen with respect to the amount of oxygen for a complete combustion of the fuel, and/or wherein the oxygen-containing gas is supplied in an amount that the k-value is in a range of 0.01 to 10, preferably 0.1 to 5, more preferably 0.5 to 2, and most preferably 0.7 to below 1.

Aspect 32. The method according to any one of the preceding aspects, wherein the particulate carbon-containing feedstock is injected via multiply inlets, preferably radial and perpendicular to the central longitudinal axis of the reactor.

Aspect 33. The method according to any one of the preceding aspects, wherein the concentration of $O_2$ in the hot gas flow is less than 5 vol.-%, preferably less than 4 vol.-%, more preferably 0.01 to 3 vol.-%, and most preferably 0.1 to 2 vol.-%.

Aspect 34. The method according to any one of the preceding aspects, wherein the obtained carbon black comprises recovered carbon black and new carbon black.

Aspect 35. The method according to any one of the preceding aspects, wherein the residence time is the time between the of the injection of the particulate carbon-containing feedstock in the reactor and the time of the quench of product mixture and is 150 ms to 4 sec, preferably 200 ms to 3 sec, more preferably 250 to 2 sec, and most preferably 250 ms to 1 sec.

Aspect 36. The method according to any one of the preceding aspects, wherein the residence time of the particulate carbon-containing feedstock is 150 ms to 4 sec, preferably 200 ms to 3 sec, more preferably 250 to 2 sec, and most preferably 250 ms to 1 sec, wherein the residence time is calculated according equation (1);

$$t_r = \frac{V}{Q}$$

Equation (1),

wherein $t_r$ is the residence time, V is the volume of the reaction volume (in $m^3$), and Q is the volumetric flow rate (in $m^3 \ast s^{-1}$).

Aspect 37. The method according to aspect 36, wherein the volumetric flow rate is the volume of the fluid after the injection of the particulate carbon-containing feedstock in the hot gas flow per second, preferably the volume of the fluid is calculated according to the ideal gas law according to equation (2)

$$Q = \frac{\dot{n}RT}{P}$$

Equation (2),

wherein Q is the volume flow of the fluid (in $m^3 \ast s^{-1}$), $\dot{n}$ is sum of the molar flow of gaseous substances $N_2$, $CO_2$, CO, $H_2O$, volatiles (in $mol \ast s^{-1}$), R is the gas constant, i.e, 8.3145 $J \cdot K^{-1} \cdot mol^{-1}$, T is the absolute temperature, P is the pressure.

Aspect 38. The method according to any one of aspects 35 to 37, the residence time is selected in such a way that the C,H-containing material in the particulate carbon-containing feedstock is completely pyrolyzed.

Aspect 39. The method according to any one of the preceding aspects, wherein the method further comprises (e) quenching the hot gas flow after the injection according to step (d).

Aspect 40. The method according to any one of the preceding aspects, wherein the hot gas flow is quenched (e) when the transmittance at 425 nm of the obtained carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

Aspect 41. The method according to any one of the preceding aspects, wherein the transmittance at 425 nm of the produced carbon black is measured and the position of the quench is adjusted until the transmittance at 425 nm of the produced carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

Aspect 42. The method according to any one of the preceding aspects, wherein the quench position in the entrained flow reactor is selected in such a way that the transmittance at 425 nm of the produced carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

Aspect 43. The method according to any one of the preceding aspects, wherein the particulate carbon-containing feedstock is injected into the reactor with a mass flow of 2 to 50 kg/h per 130 L of the reaction volume of the reactor, preferably 5 to 40 kg/h per 130 L of the reaction volume of the reactor, more preferably 8 to 30 kg/h per 130 L of the reaction volume of the reactor, and most preferably 10 to 20 kg/h per 130 L of the reaction volume of the reactor.

Aspect 44. The method according to any one of the preceding aspects, wherein the reaction volume of the reactor is the volume of the reactor between the position of the injection of the particulate carbon-containing feedstock and the position of the quench.

Aspect 45. The method according to any one of aspects 2 to 44, wherein the deagglomeration is done by (i) accelerating the particulate carbon-containing feedstock, and/or (ii) applying shear forces, preferably using an extruder.

Aspect 46. The method according to any one of aspects 2 to 45, wherein the deagglomeration is carried out in (i) a feeding and mixing device, preferably comprising a nozzle, and/or (ii) an extruder.

Aspect 47. The method according to any one of aspects 2 to 46, wherein the deagglomeration is carried out in (i) a feeding and mixing device comprising a Laval nozzle.

Aspect 48. The method according to any one of aspects 2 to 47, wherein the deagglomeration is carried out by subjecting the particulate carbon-containing feedstock into a carrier gas jet.

Aspect 49. The method according to any one of aspects 2 to 48, wherein the deagglomeration is carried out in a feeding and mixing device for particles into a reactor comprising:

(i) a carrier gas passage extending through said feeding and mixing device,

(ii) at least one carrier gas inlet, which is in fluid communication with said carrier gas passage,

(iii) at least one particle inlet,

(iv) a mixing chamber which is in fluid communication with said at least one particle inlet and with said carrier gas inlet,

(v) a deagglomeration conduit which is in fluid communication with said mixing chamber,

(vi) at least one outlet for said carrier gas entraining particles which have been fed into said mixing chamber, wherein said at least one outlet for is in fluid communication with said deagglomeration conduit, and

(vii) means for accelerating and injecting a stream of carrier gas into said mixing chamber.

Aspect 50. The method according to any one of aspects 2 to 49, wherein the deagglomerated particulate carbon-containing feedstock is injected into the reactor at a pressure from 0.5 bar to 2 bar, preferably 0.7 bar to 1.5 bar, more preferably 0.8 to 1.3 bar, and most preferably 0.8 to 1.2 bar.

Aspect 51. The method according to any one of the preceding aspects, wherein the particulate carbon-containing feedstock is comprised in a carrier gas.

Aspect 52. The method according to any one of aspects 2 to 51, wherein the deagglomerated particulate carbon-containing feedstock is comprised in a carrier gas.

Aspect 53. The method according to any one of aspects 2 to 52, wherein the deagglomerated particulate carbon-containing feedstock is comprised in a carrier gas and the carrier gas further comprises $H_2O$ and/or additives.

Aspect 54. The method according to any one of aspects 2 to 53, wherein the deagglomerated particulate carbon-containing feedstock is comprised in a carrier gas and the carrier gas further comprises $H_2O$ in an amount of 1 to 10 vol.-%, based on the total volume of the carrier gas comprising the the deagglomerated particulate carbon-containing feedstock.

Aspect 55. The method according to any one of the preceding aspects, wherein said particulate carbon-containing feedstock is injected in said entrained flow reactor by a plurality of inlets, preferably by a plurality of injection lances.

Aspect 56. The method according to any one of the preceding aspects, wherein the particulate carbon-containing feedstock is classified, preferably sieved, before the particulate carbon-containing feedstock is injected into the reactor, preferably (a) the sieve has openings of 2000 $\mu$m, 1000 $\mu$m, 500 $\mu$m, 250 $\mu$m, or 125 $\mu$m, preferably 500 $\mu$m, 250 $\mu$m, or 125 $\mu$m, and/or (b) the sieve has openings with a size that restrains particles with a size of more than 2000 $\mu$m, more than 1000 $\mu$m, more than 500 $\mu$m, more than 250 $\mu$m, or more than 125 $\mu$m, preferably more than 500 $\mu$m, more than 250 $\mu$m, or more than 125 $\mu$m.

Aspect 57. The method according to any one of the preceding aspects, wherein at least 70 wt.-%, preferably at least 80 wt.-%, more preferably at least 90 wt.-%, most preferably at least 98 wt.-%, of the particulate carbon-containing feedstock has a particle size of less than 2 mm, preferably less than 1 mm, more preferably less than 500 $\mu$m, and most preferably less than 250 $\mu$m, wherein the particle size is measured according to ASTM D 1511-12 (2017).

Aspect 58. The method according to any one of the preceding aspects, wherein at least 70 wt.-%, preferably at least 80 wt.-%, more preferably at least 90 wt.-%, most preferably at least 98 wt.-%, of the particulate carbon-containing feedstock has a particle size of less than 500 $\mu$m, wherein the particle size is measured according to ASTM D 1511-12 (2017).

Aspect 59. The method according to any one of the preceding aspects, wherein at least 70 wt.-%, preferably at least 80 wt.-%, more preferably at least 90 wt.-%, most preferably at least 98 wt.-%, of the particulate carbon-containing feedstock has a particle size of less than 1 mm, wherein the particle size is measured according to ASTM D 1511-12 (2017).

Aspect 60. The method according to any one of the preceding aspects, wherein at least 70 wt.-%, preferably at least 80 wt.-%, more preferably at least 90 wt.-%, most preferably at least 98 wt.-%, of the particulate carbon-containing feedstock has a particle size of less than 2 mm, preferably less than 250 μm, wherein the particle size is measured according to ASTM D 1511-12 (2017).

Aspect 61. Carbon black produced according to a method of any one of the preceding aspects.

Aspect 62. A composition comprising

(A) an elastomeric polymer material, and

(B) carbon black obtained according to any one of aspects 1 to 61.

Aspect 63. An article made of or comprising the composition according to aspect 62.

Aspect 64. Use of a particulate carbon-containing feedstock for the manufacturing of carbon black in an entrained flow reactor.

Aspect 65. The use according to aspect 64, wherein at least 70 wt.-%, preferably at least 80 wt.-%, more preferably at least 90 wt.-%, most preferably at least 98 wt.-%, of the particulate carbon-containing feedstock has a particle size of less than 2 mm, preferably less than 1 mm, more preferably less than 500 μm, and most preferably less than 250 μm, wherein the particle size is measured according to ASTM D 1511-12 (2017).

Aspect 66. The use according to any one of aspects 64 and 65, wherein the residence time of the particulate carbon-containing feedstock is 150 ms to 4 sec, preferably 200 ms to 3 sec, more preferably 250 to 2 sec, and most preferably 250 ms to 1 sec, wherein the residence time is calculated according equation (1);

$$t_r = \frac{V}{Q}$$

Equation (1),

wherein $t_r$ is the residence time, V is the volume of the reaction volume (in m³), and Q is the volumetric flow rate (in m³*s⁻¹).

Aspect 67. The use according to any one of aspects 64 to 66, wherein deagglomerated particulate carbon-containing feedstock is used.

Aspect 68. A method to adjust the position of the quench in an entrained flow reactor for the production of carbon black from a particulate carbon-containing feedstock, comprising:

I) injecting a particulate carbon-containing feedstock in a hot gas flow of an entrained flow reactor, wherein the hot gas flow has a temperature of at least 800 °C,
II) quenching the hot gas flow comprising the produced carbon black,
II) measuring the transmittance of the produced carbon black,
III) adjusting the position of the quench in the entrained flow reactor until the transmittance of the produced carbon black is at least 20 %, preferably at least 30 %, more preferably at least 40 %, even more preferably at least 60 %, most preferably at least 80 % wherein the transmittance at 425 nm in toluene is measured according to ASTM D 1618-18 against toluene.

**EXAMPLES**

**Example 1: Rubber granulate**

The experiments of Example 1 are performed on a small-scale furnace reactor as shown in FIG. 1. The furnace reactor comprises a combustion chamber, a choke and a tunnel. The choke reduces the diameter to 45 mm. Downstream of the choke a reactor tunnel is mounted having a diameter of 200 mm and has a length of 4200 mm.

Rubber granulate was injected to the furnace reactor in the choke via a feeding and mixing device having a nozzle as shown in FIG. 2. The reaction volume of the reactor was about 130 liters. The reaction volume was the volume of the reactor between the position of the injection of the feedstock to the position of the quench. The feeding and mixing device deagglomerated the rubber granulate by accelerating the particulate carbon-containing feedstock. However, the present invention is not limited to the feeding and mixing device according to FIG. 1 so that other feeding and mixing device can be used. The rubber granulate, i.e. Gummigranulat 0,0 - 0,5 mm (Article Nr. 005GUM), used in the experiments was obtained from ESTATO Umweltservice GmbH (ESTATO), Germany. The rubber granulate was derived from old tires and comprises synthetic rubber (SBR) and natural rubber (NR). The particle fractions are shown in table 1. Moreover, the weight average particle diameter (Dw50) was about 400 μm, measured according to ASTM D 1511-12 (2017). However, it is also possible to use different particulate carbon-containing feedstocks such as plastic granulates or biomass-based granulates.

Table 1: Particle distribution of rubber granulate from ESTATO, measured according to ASTM D 1511-12 (2017).

| Particle fraction < 0.125 mm | 2.0 wt.-% |
|---|---|
| Particle fraction 0.125 - 0.25 mm | 9.6 wt.-% |
| Particle fraction 0.2 5 - 0.50 mm | 34.5 wt.-% |
| Particle fraction 0.50 - 1.0 mm | 45.1 wt.-% |
| Particle fraction 1.0 - 2.0 mm | 8.8 wt.-% |
| Particle fraction < 2.0 mm | 0.0 wt.-% |

The characterization of the rubber granulate from ESTATO is shown in table 2.

Table 2: Characterization of the rubber granulate from ESTATO.

| Property | Measurement | Unit | Value |
|---|---|---|---|
| Carbon mass fraction | See method below | % | 87.623 |
| Hydrogen mass fraction | See method below | % | 7.767 |
| Nitrogen mass fraction | See method below | % | 0.396 |
| Sulfur mass fraction | See method below | % | 2.022 |
| Oxygen mass fraction | See method below | % | 2.191 |
| Water content | ASTM D 4928-12(2018) | % | 2.19 |
| Ash content | ASTM D 1506-99 at 550 °C, 16 h | % | 11.29 |
| Gross Calorific Value | ASTM D 4809:2018 | MJ/kg | 35.121 |

In addition, the rubber granulate comprises several metals in a mass fraction of about 300 ppm. For instance, zinc, and iron.

CHNS content determination by means of elemental analyser

The carbon mass fraction, hydrogen fraction mass, nitrogen mass fraction and sulfur mass fraction are measured using an elemental analyser with thermal conductivity and infrared detector. The analyser is a device for the fully automatic and quantitative analysis of the above elements. The combustion tube is brought to a temperature of 1100 °C and the reduction tube to 850 °C. First, a blank measurement is conducted. The carbon peak area should have a value < 50, the hydrogen peak area a value < 300, the nitrogen peak area a value < 50 and the sulphur peak area a value < 350. Otherwise, the individual adsorption columns are heated and then empty measurements are started again. The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

The compensation of the blank measurement is calculated as follows,

$$\text{acomp.} \quad = \quad a - b,$$

wherein acomp. Is the compensated peak area, a is the measured peak area, and b is the blank measurement value.

Next, the daily factor is measured. For this purpose, 3 mg of sulphanilamide and 3 mg of low-level standard (e.g. carbon black standard) are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{\text{theor.}}}{c_{\text{act.}}},$$

Wherein f is the daily factor, $c_{\text{theor.}}$ is the theoretical factor, $c_{\text{act.}}$ is the actual calculated elemental concentration.

Then, 8 tin capsules each containing 5 mg $\pm$ 1 mg of the desired measured component, such as rubber granulate, are weighed. After weighing the respective samples, they are placed in the capsule press, covered with helium for 35 s and then cold welded.

For the measurement, the combustion tube is enriched with $O_2$. The elements C, H, N and S burn to form $CO_2$, $H_2O$, NOx, $SO_2$ and $SO_3$. Halogen bound in the sample reacts to form volatile halogen compounds. In addition, there are $WO_3$ granules in the combustion tube that provide further $O_2$ as a catalyst, prevent the formation of nonvolatile sulphates and bind interfering alkali and alkaline earth elements. The carrier gas stream is fed into the reduction tube with Cu filling. Nitrogen oxides (NOx) are completely reduced to $N_2$ at the copper contact. $SO_3$ is reduced to $SO_2$. Volatile halogen compounds are bound to the silver wool.

$N_2$ is not adsorbed and enters the thermal conductivity detector as the first measuring component, $CO_2$, $H_2O$ and $SO_2$ are adsorbed on the respective adsorption columns.

Then, one after the other, the adsorption columns are brought to desorption temperature, so that $CO_2$, then $H_2O$ as carrier gas enters the thermal conductivity detector and $SO_2$ enters the infrared detector. Depending on the type and concentration of the components, the detector delivers an electrical signal which is digitised and integrated. The measurement signal is recorded as a function of time and displayed as an integral value. The absolute element content of the sample is calculated from this integral value of the individual measurement peaks and the calibration factors.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

O content determination by means of elemental analyser

Depending on the oxygen concentration, an electrical signal is transmitted from the thermal conductivity detector (WLD) of the elemental analyser to a micro controller and then displayed as an integral value. From the integral value of the measurement peaks and the calibration factor, the absolute element content of the sample is concluded.

The pyrolysis tube is heated to a temperature of 1050°C. First, a blank measurement is conducted. The oxygen peak area should have a maximum value of 200. If the blank value is not below 200, CO adsorption column should be heated up (260 °C, CO desorption 150 °C). After the blank values have been successfully measured, the mean value of the blank value areas is calculated.

The blank measurement is calculated as follows:

$$b = \frac{\sum b_i}{n},$$

wherein b is the blank measurement, $b_i$ is the peak area of the respective blank measurement, n is the number of blank measurements, i is an index of 1 to n.

Next, the daily factor is measured. For this purpose, 3 mg of acetanilide are weighed into each of 8 tin capsules. After weighing out the respective sample, it is placed in the capsule press, overlaid with helium for 35 s and then cold-sealed. Subtracting the blank value, the known theoretical element concentration of the standard samples is put in relation to the actually calculated element concentration. This results in the daily factor, which must be between 0.9 - 1.1. If this is not the case, these measurements should be repeated with newly opened standards. Otherwise, a new calibration must be carried out according to the manufacturer's instructions.

The daily factor is calculated as follows,

$$f = \frac{c_{theor.}}{c_{act.}},$$

wherein f is the daily factor, $c_{theor.}$ is the theoretical factor, $c_{act.}$ is the actual calculated elemental concentration.

Then, 8 tin capsules each containing 5 mg ±1 mg of the desired measured component, such as rubber granulate, are weighed. After weighing the respective samples, they are placed in the capsule press, covered with helium for 35 s and then cold welded. The samples are then measured.

The element concentration is calculated according to the following equation

$$c = \frac{a * 100 * f}{w},$$

wherein c is the elemental concentration (in %), a is the absolute element content (in mg), f is the daily factor, and w is the actual amount of the sample.

Reaction conditions in the furnace reactor

The reactions conditions for the manufacturing of the carbon black are shown in table 3. The temperature of the hot gas flow after the injection of the feedstock is calculated as described in the specification. As mentioned above, the temperature (absolute temperature) can also be measured with a pyrometer. Furthermore, the residence time for particles having a diameter of 0.5 mm and 1 mm are calculated. For the calculation a pyrolysis modelling program was used.

Table 3: Reaction conditions in the furnace reactor.

| Experiment | A1 | A2 | A3 | A4 | A5 |
|---|---|---|---|---|---|
| Combustion Air Flow (STP)[1] / $m^3$/h | 150 | 150 | 150 | 150 | 150 |
| Natural Gas Flow (STP) / $m^3$/h | 10.3 | 10.8 | 12.1 | 10.9 | 13.8 |
| K value[2] | 0.66 | 0.69 | 0.78 | 0.70 | 0.89 |
| Combustion air temperature upstream combustion chamber / °C | 354 | 450 | 400 | 447 | 341 |
| Natural Gas temperature upstream combustion chamber / °C | 21 | 21 | 21 | 21 | 21 |
| Nitrogen purge flow (STP) / $m^3$/h | 14 | 10.5 | 8.7 | 8 | 8.3 |
| Rubber granulate mass flow / kg/h | 25 | 16 | 18 | 25 | 11 |
| O2 molar fraction @ dosing reactor dosing point / % | n/a | 5.5 | 5.7 | 4.2 | 6.7 |
| Calculated temperature of the hot gas flow / °C | 1493 | 1633 | 1626 | 1580 | 1677 |
| Residence time /s | 0.394 | 0.375 | 0.382 | 0.39 | 0.376 |
| Optimal residence time for particles having a diameter of 0.5 mm at the calc. temperature /s | 0.35 | 0.32 | 0.32 | 0.32 | 0.31 |

(continued)

| Experiment | A1 | A2 | A3 | A4 | A5 |
|---|---|---|---|---|---|
| Optimal residence time for particles having a diameter of 1 mm at the calc. temperature /s | 1.32 | 1.125 | 1.125 | 1.22 | 1.1 |
| [1]273.15 K and 101325 Pa<br>[2]The k value is defined by the ratio of stoichiometric $O_2$ amount that is necessary for the complete stoichiometric combustion of the fuel to the supplied $O_2$ amount | | | | | |

Table 2: continued

| Experiment | A6 | A7 | A8 | A9 | A10 |
|---|---|---|---|---|---|
| Combustion Air Flow (STP) / m$^3$/h[1] | 150 | 150 | 150 | 150 | 150 |
| Natural Gas Flow (STP) / m$^3$/h | 13.9 | 12.43 | 10.8 | 12.4 | 12.4 |
| K value | 0.89 | 0.80 | 0.69 | 0.80 | 0.80 |
| Combustion air temperature upstream combustion chamber / °C | 456 | 398 | 350 | 405 | 390 |
| Natural Gas temperature upstream combustion chamber / °C | 21 | 21 | 21 | 21 | 21 |
| Nitrogen purge flow (STP) / m$^3$/h | 5.7 | 7.1 | 6.5 | 6.7 | 7.5 |
| Rubber granulate mass flow / kg/h | 11 | 18 | 16 | 18 | 18 |
| O2 molar fraction @ dosing reactor dosing point / % | 7.3 | 5 | 4.9 | 5 | 3.9 |
| Calculated temperature of the hot gas flow / °C | 1763 | 1640 | 1592 | 1645 | 1632 |
| Residence time /s | 0.367 | 0.383 | 0.391 | 0.383 | 0.383 |
| Optimal residence time for particles having a diameter of 0.5 mm at the calc. temperature /s | 0.28 | 0.315 | 0.32 | 0.31 | 0.32 |
| Optimal residence time for particles having a diameter of 1 mm at the calc. temperature /s | 1.05 | 1.11 | 1.22 | 1.125 | 1.125 |

After the injection of the rubber granulate feedstock, the reaction is quenched with water and the obtained carbon black was dried and milled to obtain a volume average particle size of about 5 μm. The obtained carbon black according to the invention (see Experiments A1 to E12) were compared to a standard carbon black N660 and a recovered carbon blacks rCB. rCB was recovered from a pyrolysis of rubber granulates.

The temperature in the combustion chamber, i.e. the temperature of the hot combustion gases, was controlled by the temperature of the combustion air temperature upstream combustion chamber (i.e. temperature of the oxygen-containing gas). The k value was controlled by the natural gas flow (fuel) into the combustion chamber.

The produced carbon black comprises about 53 wt.-% recovered carbon black, about 27 wt.-% of new carbon black and about 20 wt.-% of ash. Recovered carbon black comprises coke. Since the rubber granulate is used in an entrained flow reactor process, it is possible to not only recover carbon black but also to produce new carbon black derived from the rubber. Thus, the ash content is lower compared to recovered carbon black from REOIL (RCB615, about 23.2 wt.-% ash). The ash content can be measured according to ASTM D 1506-99 at 550 °C, 16 h.

The carbon black obtained in each experiment was characterized and the results as shown in table 4.

Table 4: Characterization of the obtained carbon black

| Experiment | B1 | B2 | B3 | B4 | B5 | B6 | B7 |
|---|---|---|---|---|---|---|---|
| Carbon black | N550[3] | N660[4] | rCb[5] | A1 | A2 | A3 | A4 |
| Aggregate size[6], number mean /nm | 212 | 208 | 98 | n/a | n/a | 46 | 46 |
| Aggregate size[6], weight mean /nm | | | 167 | n/a | n/a | 102 | 106 |
| Aggregate size[6], weight mode /nm | 172 | 156 | | n/a | n/a | 70 | 74 |

(continued)

| Experiment | B1 | B2 | B3 | B4 | B5 | B6 | B7 |
|---|---|---|---|---|---|---|---|
| Specific surface[7] (AGV) / m$^2$/g | | | 24 | n/a | n/a | 42.6 | 41.3 |
| Volatiles[8] /°C | | | 4.5 | n/a | n/a | 2.4 | 2.3 |
| BET surface area[9] / m$^2$/g | 39 | 35.1 | 72.4 | n/a | 117.4 | 86.6 | 78.2 |
| STSA surface area[10] / m$^2$/g | 38.75 | 34.55 | 60.9 | n/a | 91 | 77.8 | 72.1 |
| Iodine adsorption[11] | 42.7 | 36.6 | 94.5 | n/a | n/a | 101.1 | 77.8 |
| pH value[12] | 8.7 | 8.4 | 7.32 | n/a | n/a | 7.42 | 7.38 |
| Compressed oil absorption number (COAN)[13]/ ml/100g | 83.9 | 72 | 80.2 | n/a | n/a | 62.2 | 64.4 |
| Oil absorption number (OAN)[14] | 120.95 | 90.35 | 92.3 | n/a | n/a | 64 | 68.6 |
| Transmittance[15] | 97 | 92.7 | n/a | n/a | 94.9 | 78.7 | 57.5 |

[3]N550 carbon black obtained from liquid feedstock materials, Orion Engineered Carbons GmbH

[4]N660 carbon black obtained from liquid feedstock materials, Orion Engineered Carbons GmbH

[5]rCB 2 recovered carbon black, REOIL S.P. Z O.O.

[6]Aggregate size distribution was measured as described below.

[7]Specific surface (AGV) was measured as described below.

[8]Volatiles were measured at 950 °C for 7 min as described below

[9]BET surface area was measured according to ASTM D6556-21.

[10]STSA surface area was measured according to ASTM D6556-21.

[11]Iodine adsorption number was measured according to ASTM D1510-21.

[12]pH-value is measured according to ASTM D1512-21, Test Method B - Sonic Slurry

[13]Compressed oil absorption number (COAN) was measured according to ASTM D3493-20 (using paraffinic oil)

[14]Oil absorption (OAN) number was measured according to ASTM D2414-19 (using paraffinic oil)

[15] Transmittance at 425 nm in toluene (Transmittance of Toluene Extract) was measured according to ASTM D 1618-18 against toluene.

Table 4: continued

| Experiment | B8 | B9 | B10 | B11 | B12 | B13 |
|---|---|---|---|---|---|---|
| Carbon black | A5 | A6 | A7 | A8 | A9 | A10 |
| Aggregate size[6], number mean /nm | 42 | 41 | 47 | 49 | n/a | n/a |
| Aggregate size[6], weight mean /nm | 105 | 102 | 108 | 105 | n/a | n/a |
| Aggregate size[6], weight mode /nm | 74 | 73 | 76 | 72 | n/a | n/a |
| Specific surface[7] (AGV) / m$^2$/g | 42 | 43.9 | 40.2 | 40.6 | n/a | n/a |
| Volatiles[8] /°C | 2.6 | 2.9 | 2.2 | 2.1 | n/a | n/a |
| BET surface area[9] / m$^2$/g | 90.9 | 128.6 | n/a | 87.5 | 84.2 | 79.5 |
| STSA surface area[10] / m$^2$/g | 83.2 | 88.4 | n/a | 77.1 | 77 | 75.1 |
| Iodine adsorption[11] | 94.4 | 129.2 | 93.2 | 99.7 | n/a | n/a |
| pH value[12] | 7.36 | 7.06 | 7.23 | 8.01 | n/a | n/a |
| Compressed oil absorption number (COAN)[13]/ ml/100g | 64.5 | 63.4 | 63.7 | 64.3 | n/a | n/a |
| Oil absorption number (OAN)[14] | 68 | 66.5 | 70.6 | 67.2 | n/a | n/a |

(continued)

| Experiment | B8 | B9 | B10 | B11 | B12 | B13 |
|---|---|---|---|---|---|---|
| Transmittance[15] | 63 | 95 | 52.8 | 86 | 66.9 | 48.6 |

The aggregate size distribution

All test results are analyzed in accordance with ISO 15825:2016 using a Brookhaven BI-DCP disc centrifuge with red-light diode. The cited test results are provided in the Brookhaven software after appropriate parameter adjustments described in ISO 185825:2017-03 section "Computer and Software Setup".

Specific surface (AGV)

The specific surface area of a tested sample is available in said Brookhaven software. After sample testing and reviewing the results, click on "detailed" results and read the value "specific surface area sq/g" on the computer display.

Volatiles at 950°C

Volatiles at 950°C were measured using a thermogravimetric instrument of Fa. LECO Instrumente GmbH (TGA-701) according to the following protocol: Pans were dried at 650°C for 30 min. The carbon black materials were stored in a desiccator equipped with desiccant prior to measurements. Baked-out pans were loaded in the instrument, tared and filled with between 0.5 g to 10 g carbon black material. Then, the oven of the TGA instrument loaded with the sample-filled pans was gradually heated up to 105°C by automated software control and the samples were dried until a constant mass was achieved. Subsequently, the pans were closed by lids, the oven was purged with nitrogen (99.9 vol% grade) and heated up to 950°C. The oven temperature was kept at 950°C for 7 min. The content of volatiles at 950°C was calculated using the following equation:

$$Volatiles \ = \frac{m(prior\ to\ heating) - m(after\ 7\ minutes@950°C)}{m(prior\ to\ heating)} \cdot 100\%.$$

Results

It has been surprisingly found, that it is possible to use particulate carbon-containing feedstock in an entrained flow reactor process. As can be seen from table 3, the obtained carbon has desirable properties compared to standard carbon black products obtained from liquid carbon-containing feedstocks.

Moreover, the aggregate size as well as the aggregate surface area are lower compared to aggregate size and the aggregate surface area of the recovered carbon blacks. This indicates that the resulting carbon black has a lower coke content. The specific surface of the aggregate size measurement further indicates the amount of coke present in the carbon black. Moreover, a high aggregate size is also an indication of a high coke content.

Moreover, as can be seen from table 3, the residence time of A6 is 0.367 s and the temperature of the hot gas flow was 1763 °C. It is believed that the higher temperature results in an optimal residence time for particles having a diameter of 0.5 mm of 0.28 s and for particles having a diameter of 1 mm of 1.05 s. The transmittance in experiment B9 utilizing A6 is 95 %. The transmittance is an indicator of a complete pyrolysis of the feedstock material or C,H-containing compounds in the feedstock. Thus, it is believed that a higher temperature and a high residence time is beneficial for the manufacturing of carbon black from particulate feedstocks.

**Example 2: Rubber compositions**

The preparation of the rubber compositions and the in rubber tests are described below. A general process for the production of rubber compounds and their vulcanisates is described in the book: "Rubber Technology Handbook", W. Hofmann, Hanser Verlag 1994.

The rubber compositions are mentioned in table 5. The ESBR Buna SB 1500 was introduced to a laboratory mixer GK1.5E with an intermeshing PES5-rotor geometry made by Harburg Freudenberger and milled for 30 seconds at a chamber temperature of 40°C, a fill factor of 0.66 and a rotor speed of 45 rpm. Subsequently, half of the carbon black volume, ZnO and stearic acid were added under milling. After 90 seconds the other half of the carbon black volume and the 6PPD were added. After further 90 secs the ram was lifted and cleaned, and the batch was mixed for another 90 seconds. The total mixing time in the internal mixer was 5 minutes and afterwards the batch was dropped on an open mill for cooling down and additional distributive mixing. The batch temperature did not exceed 160°C in the first mixing step. The batch was allowed to rest overnight.

During the second and final mixing step the sulfur and the accelerator (Vulkacit CZ/EG-Z) were then added in the indicated amounts to the master batch obtained from the first mixing step. The resulting mixture was milled in the GK1.5E mixer with a chamber temperature of 40°C and a fill factor of 0.64 for 2 minutes. The rotor speed was 30 rpm and it was secured that the batch temperature did not exceed 110 °C. Finally, the mixture was dropped from the internal mixer processed again on an open mill. The resulting vulcanizable compositions (green compounds) were cured between 11 and 15 minutes (C1: 15 min, C2: 12 min, C3: 12 min, C4: 12 min, C5: 11 min, C6: 12 min, C7: 12 min, C8: 11 min, C9: 11 min) at a temperature of 165 °C.

Table 5: The rubber compositions using different carbon blacks as noted in table 6.

| | Unit | Composition |
|---|---|---|
| Rubber[16] | phr | 100 |
| Carbon black[17] | phr | 50 |
| ZnO[21] | phr | 3 |
| Stearic Acid[22] | phr | 2 |
| 6PPD[18] | phr | 1 |
| Sulfur[19] | phr | 1.5 |
| CBS[20] | phr | 1.5 |
| [16]Rubber ESBR, Buna SB 1500, Resinex Deutschland GmbH | | |
| [17]Carbon black: N660, N550, rCB or of Experiments A3 to 5 and A8 to A10 (see table 6) | | |
| [18]6PPD, VULKANOX 4020/LG, Brenntag GmbH | | |
| [19]Sulfur, MAHLSCHWEFEL 80/90° unbeölt, Avokal GmbH | | |
| [20]CBS, VULKACIT CZ/EG-C, Lanxess N.V. | | |
| [21]ZnO, ZNO RS RAL 844 C, Norkem B.V. | | |
| [22]Stearic Acid, Palmera B 1804, Caldic Deutschland GmbH | | |

The properties of the specimens were measured and the results are indicated in table 6. The results are compared with carbon blacks produced by using a liquid carbon black feedstock (N660 and N550) and a recovered carbon blacks rCB.

Table 6: Properties of the produced carbon black in rubber compositions.

| Experiment | C1 | C2 | C3 | C4 |
|---|---|---|---|---|
| Carbon black | N660[3] | N550[4] | rCb[5] | A3 |
| Loss Factor tan(d)[23] | 0.125 | 0.139 | 0.142 | 0.156 |
| Topography relative peak area[24] / % | 0.63 | 0.2 | 1.01 | 6.91 |
| Tensile Strength[25] / Mpa | 20.5 | 24.1 | 23.3 | 26.3 |
| Elongation at Break[26] / % | 474 | 503 | 631 | 665 |
| Abrasion[27] / mm[3] | 96 | 82 | 111 | 107 |
| Modulus 300%[28] / Mpa | 11.7 | 13 | 6.7 | 5.5 |
| Ball rebound[29] | 68.2 | 65.1 | 66 | 62.2 |

(continued)

| Experiment | C1 | C2 | C3 | C4 |
|---|---|---|---|---|
| Tear Resistance GRAVES[30] | 18.2 | 21.5 | 17.9 | 18.6 |

[23]Loss Factor tan(d) was measured as described below.
[24]Topography relative peak area was measured as described below.
[25]Tensile Strength was measured ISO 37 - 2012, S2.
[26]Elongation at Break was measured ISO 37 - 2012, S2.
[27]Abrasion was measured at 23 °C DIN ISO 4649:2014-03, 10 N.
[28]Modulus 300% was measured ISO 37 - 2012, S2.
[29]Ball rebound was measured at 60 °C ASTM D 2632:2015.
[30]Tear Resistance GRAVES was measured DIN ISO 34-1:2016-09, method B, variant (b).

| Experiment | C5 | C6 | C7 | C8 | C9 |
|---|---|---|---|---|---|
| Carbon black | A4 | A5 | A6 | A7 | A8 |
| Loss Factor tan(d) | 0.153 | 0.155 | 0.159 | 0.154 | 0.152 |
| Topography relative peak area / % | 4.43 | 3.59 | 6.13 | 2.7 | 3.2 |
| Tensile Strength / Mpa | 25.4 | 25 | 25.2 | 25.6 | 26.6 |
| Elongation at Break / % | 629 | 655 | 651 | 612 | 665 |
| Abrasion / mm$^3$ | 105 | 114 | 112 | 107 | 117 |
| Modulus 300% / Mpa | 6.1 | 5.8 | 5.9 | 6.9 | 5.6 |
| Ball rebound | 62.2 | 62.4 | 61.6 | 61.7 | 62.8 |
| Tear Resistance GRAVES[30] | 19.1 | 19.7 | 19.1 | 20.2 | 18.4 |

Topography relative peak area

Topography relative peak area is a measure for filler dispersion determined by means of surface topography, inclusive of Medalia correction, according to the procedure described in A. Wehmeier, "Filler Dispersion Analysis by Topography Measurements", Technical Report TR 820, Degussa GmbH as well as in A. Wehmeier, "Entwicklung eines Verfahrens zur Charakterisierung der Fullstoffdispersion in Gummimischungen mittels einer Oberflachentopographie", Thesis, 1998 at the Münster University of Applied Sciences, and DE 199 17975 C2.

Loss factor tan(d)

The above-mentioned values and the loss factor tan(d) were measured according to DIN 53 513 in strain-controlled mode (1 ± 0.5 mm) or force-controlled mode (50 N ± 25 N) on a cylindrical specimen (10 mm in height and 10 mm in diameter) at 60°C with a frequency of 16 Hz.

Results

The example reveal that the carbon blacks produced according to the invention (Carbon blacks A3 - A5, A8 - A10) can be beneficially used in a rubber composition (Experiment C5 to C10). The produced carbon blacks have a low loss factor tan(d) combined with a high topography and a high tensile strength. Moreover, the elongation at break is beneficially between 612 and 665 %. The ball rebound of the produced carbon blacks is comparable with the ball rebound of carbon black N660 and carbon black N550.

It will be appreciated that various modifications can be made, and that many changes can be made in the preferred embodiments without departing from the principle of the invention.

**Claims**

1.  A method for producing carbon black from a particulate carbon-containing feedstock in entrained flow reactor having a flow passage along a central longitudinal axis of the reactor, comprising:

    (a) providing a hot gas flow,
    (b) providing a particulate carbon-containing feedstock, and
    (d) injecting the particulate carbon-containing feedstock in the hot gas flow to form carbon black,

    wherein the hot gas flow has a temperature of at least 800 °C.

2.  The method according to claim 2, wherein the particulate carbon-containing feedstock comprises rubber granulate, plastic granulate, and/or biomass-based granulate, preferably the particulate carbon-containing feedstock comprises rubber granulate, wherein the rubber granulate comprising carbon black.

3.  The method according to any one of claims 1 or 2, wherein at least 70 wt.-%, preferably at least 80 wt.-%, more preferably at least 90 wt.-%, most preferably at least 98 wt.-%, of the particulate carbon-containing feedstock has a particle size of less than 2 mm, preferably less than 1 mm, more preferably less than 500 μm, and most preferably less than 250 μm, wherein the particle size is measured according to ASTM D 1511-12 (2017).

4.  The method according to any one of the preceding claims, wherein the particle size distribution of the particulate carbon-containing feedstock is measured according to ASTM D 1511-12 (2017) and

    (a) Sieve No. 10 retains 1 to 0 to 10 wt.-%, preferably 1 to 8 wt.-%, more preferably 1 to 5 wt.-%, and most preferably 1 to 3 wt.-% of the particulate carbon-containing feedstock, and/or
    (b) Sieve No. 18 retains 1 to 25 wt.-%, preferably 2 to 20 wt.-%, more preferably 4 to 15 wt.-%, and most preferably 5 to 12 wt.-% of the particulate carbon-containing feedstock, and/or
    (c) Sieve No. 35 retains 10 to 80 wt.-%, preferably 15 to 70 wt.-%, more preferably 20 to 60 wt.-%, and most preferably 25 to 55 wt.-% of the particulate carbon-containing feedstock, and/or
    (d) Sieve No. 60 retains 5 to 70 wt.-%, preferably 10 to 60 wt.-%, more preferably 15 to 50 wt.-%, and most preferably 20 to 45 wt.-% of the particulate carbon-containing feedstock, and/or
    (e) Sieve No. 120 retains 1 to 80 wt.-%, preferably 7 to 70 wt.-%, more preferably 5 to 60 wt.-%, and most preferably 7 to 50 wt.-% of the particulate carbon-containing feedstock, and/or
    (f) Bottom receive pan comprises less than 4 wt.-%, preferably less than 3 wt.-%, more preferably 0 to 2 wt.-%, and most preferably 0.01 to 1 wt.-% of the particulate carbon-containing feedstock.

5.  The method according to any one of the preceding claims, wherein the hot gas flow is obtained by electrical preheating, plasma heating and combustion of a fuel and oxygen-containing gas, and/or wherein the entrained flow reactor is a furnace reactor.

6.  The method according to any one of the preceding claims, wherein the particulate carbon-containing feedstock is classified, preferably sieved, before the particulate carbon-containing feedstock is injected into the reactor, preferably (a) the sieve has openings of 2000 μm, 1000 μm, 500 μm, 250 μm, or 125 μm, preferably 500 μm, 250 μm, or 125 μm, and/or (b) the sieve has openings with a size that restrains particles with a size of more than 2000 μm, more than 1000 μm, more than 500 μm, more than 250 μm, or more than 125 μm, preferably more than 500 μm, more than 250 μm, or more than 125 μm.

7.  The method according to any one of the preceding claims, wherein the residence time of the particulate carbon-containing feedstock is 150 ms to 4 sec, preferably 200 ms to 3 sec, more preferably 250 to 2 sec, and most preferably 250 ms to 1 sec, wherein the residence time is calculated according equation (1);

$$t_r = \frac{V}{Q}$$

Equation (1),

wherein $t_r$ is the residence time, V is the volume of the reaction volume (in m$^3$), and Q is the volumetric flow rate (in

$m^3*s^{-1}$).

8. The method according to any one of the preceding claims, wherein the quench position in the entrained flow reactor is selected in such a way that the transmittance at 425 nm of the produced carbon black is at least 20 %, preferably at least 30 %, more preferably at least 40 %, even more preferably at least 60 %, most preferably at least 80 %, wherein the transmittance at 425 nm in toluene is measured according to ASTM D 1618-18 against toluene.

9. The method according to any one of the preceding claims, wherein the particulate carbon-containing feedstock is injected into the reactor with a mass flow of 2 to 50 kg/h per 130 L of the reaction volume of the reactor, preferably 5 to 40 kg/h per 130 L of the reaction volume of the reactor, more preferably 8 to 30 kg/h per 130 L of the reaction volume of the reactor, and most preferably 10 to 20 kg/h per 130 L of the reaction volume of the reactor.

10. The method according to any one of the preceding claims, wherein step (b) further comprises deagglomerating the particulate carbon-containing feedstock and in step (d), the deagglomerated particulate carbon-containing feedstock is injected in the hot gas flow to form carbon black, wherein the deagglomeration is done by (i) accelerating the particulate carbon-containing feedstock, and/or (ii) applying shear forces, preferably using an extruder.

11. Carbon black produced according to a method of any one of the preceding claims.

12. A composition comprising

(A) an elastomeric polymer material, and
(B) carbon black obtained according to any one of claims 1 to 10.

13. An article made of or comprising the composition according to claim 12.

14. Use of a particulate carbon-containing feedstock for the manufacturing of carbon black in an entrained flow reactor.

15. A method to adjust the position of the quench in an entrained flow reactor for the production of carbon black from a particulate carbon-containing feedstock, comprising:

I) injecting a particulate carbon-containing feedstock in a hot gas flow of an entrained flow reactor, wherein the hot gas flow has a temperature of at least 800 °C,
II) quenching the hot gas flow comprising the produced carbon black,
II) measuring the transmittance of the produced carbon black,
III) adjusting the position of the quench in the entrained flow reactor until the transmittance of the produced carbon black is at least 20 %, preferably at least 30 %, more preferably at least 40 %, even more preferably at least 60 %, most preferably at least 80 % wherein the transmittance at 425 nm in toluene is measured according to ASTM D 1618-18 against toluene.

100

FIG. 1

101
101a
101a
101b
102
103
104a
104b
104c
104d
105
106

FIG. 2

300

301

302

306

304

305

303

303a

302a

FIG. 3

FIG. 4

FIG. 5

Europäisches Patentamt

European Patent Office

Office européen des brevets

# EUROPEAN SEARCH REPORT

Application Number

EP 23 16 0120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 124 396 A (BRANAN JR JOHN M [US] ET AL) 23 June 1992 (1992-06-23) | 11-13 | INV. C09C1/50 |
| A | * column 7, line 5 - column 8, line 62; claims 1-10 * | 1-10,14, 15 | |
| X | US 4 503 027 A (CHENG PAUL J [US]) 5 March 1985 (1985-03-05) | 11-13,15 | |
| A | * column 1, line 16 - line 60 * * column 3, line 26 - column 4, line 2; claim 1 * | 1-10,14 | |
| Y | WO 2016/030495 A1 (ORION ENGINEERED CARBONS GMBH [DE]) 3 March 2016 (2016-03-03) * page 10, line 5 - line 19; claim 1; figure 1 * | 1-10,14 | |
| Y | MERCI VASAN A ET AL: "Development of Variabel Load Pneumatic Coal Feeder using Eductor", INTERNATIONAL JOURNAL OF APPLIED ENGINEERING RESEARCH (NEW DELHI), RESEARCH INDIA PUBLICATIONS, IN, vol. 10, no. 3, 1 January 2015 (2015-01-01), pages 11400-11404, XP002809946, ISSN: 0973-4562 * the whole document * | 1-10,14 | TECHNICAL FIELDS SEARCHED (IPC) C09C |
| Y | WO 02/26914 A2 (FED RECYCLING TECHNOLOGIES INC [US]; DENISON GILBERT W [US]) 4 April 2002 (2002-04-04) * figures 1,5 * | 1-10,14 | |
| A | WO 2006/124773 A2 (CABOT CORP [US]; GREEN MARTIN C [US] ET AL.) 23 November 2006 (2006-11-23) * paragraph [0041] * | 1-15 | |

The present search report has been drawn up for all claims

| Place of search | Date of completion of the search | Examiner |
|---|---|---|
| The Hague | 17 August 2023 | Siebel, Eric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 0120

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2023

| Patent document cited in search report | | Publication date | Patent family member(s) | | Publication date |
|---|---|---|---|---|---|
| US 5124396 | A | 23-06-1992 | NONE | | |
| US 4503027 | A | 05-03-1985 | NONE | | |
| WO 2016030495 | A1 | 03-03-2016 | BR | 112017002891 A2 | 05-12-2017 |
| | | | CN | 106661344 A | 10-05-2017 |
| | | | CN | 113122026 A | 16-07-2021 |
| | | | EP | 3186313 A1 | 05-07-2017 |
| | | | JP | 6959861 B2 | 05-11-2021 |
| | | | JP | 7000398 B2 | 19-01-2022 |
| | | | JP | 2017525825 A | 07-09-2017 |
| | | | JP | 2020033569 A | 05-03-2020 |
| | | | KR | 20170048344 A | 08-05-2017 |
| | | | RU | 2017106345 A | 01-10-2018 |
| | | | SA | 517380977 B1 | 11-11-2021 |
| | | | US | 2017260397 A1 | 14-09-2017 |
| | | | US | 2021108085 A1 | 15-04-2021 |
| | | | WO | 2016030495 A1 | 03-03-2016 |
| | | | ZA | 201700882 B | 31-08-2022 |
| WO 0226914 | A2 | 04-04-2002 | AU | 1132702 A | 08-04-2002 |
| | | | AU | 2002211327 B2 | 30-11-2006 |
| | | | BR | 0114286 A | 21-12-2004 |
| | | | CA | 2423714 A1 | 04-04-2002 |
| | | | CN | 1468288 A | 14-01-2004 |
| | | | EP | 1337593 A2 | 27-08-2003 |
| | | | HU | 0302916 A2 | 28-01-2004 |
| | | | MX | PA03002773 A | 13-12-2004 |
| | | | PL | 362718 A1 | 02-11-2004 |
| | | | US | 2002117388 A1 | 29-08-2002 |
| | | | WO | 0226914 A2 | 04-04-2002 |
| WO 2006124773 | A2 | 23-11-2006 | AT | 491755 T | 15-01-2011 |
| | | | BR | PI0610707 A2 | 20-07-2010 |
| | | | CA | 2608970 A1 | 23-11-2006 |
| | | | CN | 101218310 A | 09-07-2008 |
| | | | CN | 102604442 A | 25-07-2012 |
| | | | EP | 1907485 A2 | 09-04-2008 |
| | | | JP | 6080707 B2 | 15-02-2017 |
| | | | JP | 2008540806 A | 20-11-2008 |
| | | | JP | 2013216906 A | 24-10-2013 |
| | | | JP | 2016104881 A | 09-06-2016 |
| | | | KR | 20080017359 A | 26-02-2008 |
| | | | TW | 200704725 A | 01-02-2007 |
| | | | US | 2006264561 A1 | 23-11-2006 |
| | | | WO | 2006124773 A2 | 23-11-2006 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 23 16 0120

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2023

| Patent document cited in search report | Publication date | Patent family member(s) | Publication date |
| --- | --- | --- | --- |

-----------------------------------------------------------------------------

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020117388 A1
- WO 1993012633 A1
- DE 19917975 C2


**Non-patent literature cited in the description**

- **J.-B. DONNET et al.** Carbon Black:Science and Technology
- **W. HOFMANN.** Rubber Technology Handbook. Hanser Verlag, 1994
- Filler Dispersion Analysis by Topography Measurements. **A. WEHMEIER.** Technical Report TR 820. Degussa GmbH
- Entwicklung eines Verfahrens zur Charakterisierung der Fullstoffdispersion in Gummimischungen mittels einer Oberflachentopographie. **A. WEHMEIER.** Thesis. Münster University of Applied Sciences, 1998